# EUROPÄISCHE PATENTSCHRIFT

(11) **EP 0 875 428 B1**
(45) Veröffentlichungstag und Bekanntmachung des Hinweises auf die Patenterteilung: **13.02.2002**
(21) Anmeldenummer: 98111651.0
(22) Anmeldetag: 05.09.1995
(51) Int. Cl.: B60R 22/46

(54) **Gurtstraffer bei Sicherheitsgurtanordnungen in Kraftfahrzeugen**
Seatbelt pretensioner in vehicles
Tendeur de ceinture de sécurité dans les véhicules

(30) Priorität: 13.09.1994 DE 4432594; 15.12.1994 DE 4444775
(43) Veröffentlichungstag der Anmeldung: 04.11.1998
(62) Teilanmeldung aus: 95113940.1
(73) Patentinhaber: TAKATA (EUROPE) VEHICLE SAFETY TECHNOLOGY GmbH, 89081 Ulm (DE)
(72) Erfinder: Kopetzky, Robert, 89173 Lonsee (DE); Bannert, Georg, 88444 Ummendorf (DE); Emmert, Erik, 89073 Ulm (DE); Steffan, Hermann, 8010 Graz (AT); Diepold, Ulrich, 89081 Ulm (DE); Kempfle, Thomas, 89346 Biberthal (DE); Wengert, Andreas, 73572 Heuchlingen (DE)
(74) Vertreter: Manitz, Gerhart, Dr.

(56) Entgegenhaltungen:
- EP-A- 0 581 288

## Beschreibung

Die Erfindung betrifft einen Gurtstraffer bei Sicherheitsgurtanordnungen in Kraftfahrzeugen nach dem Oberbegriff des Patentanspruches 1.

Aus den Figuren 9 und 10 der EP 0 581 288 A1 ist bereits ein Gurtstraffer dieser Art bekannt. Das Zugband bildet dabei zwischen der Umfangswand des Bandlaufraumes und dem Umfang der Antriebswelle bzw. Antriebsrolle einen sich im wesentlichen über 180° erstreckenden Bogen, der auf der konkaven Seite bei einer unfallbedingten Beschleunigung von einem Druckgas beaufschlagt wird, wodurch entsprechend der frei durchhängenden effektiven Fläche des Zugbandes eine entsprechende Kraft auf das Band in Umfangsrichtung ausgeübt wird, die an der Antriebswelle bzw. Antriebsrolle, auf die es teilweise aufgewickelt ist, ein entsprechendes Drehmoment erzeugt, so daß die Antriebswelle bzw. Antriebsrolle entsprechend in Umlauf versetzt wird. Aufgrund einer bei einer unfallbedingten Beschleunigung einrückenden Kupplung wird so das Drehmoment auf die Gurtaufwickelrolle in Einziehrichtung übertragen.

Die Dimensionierung der einzelnen Bauelemente soll hierbei so sein, daß eine Mindest-Strafflänge des Gurtes von 140 mm erzielt wird. Bevorzugt soll jedoch noch eine gewisse zusätzliche Einzugslänge zur Verfügung stehen, so daß der Gurt durch den Gurtstraffer z.B. um maximal 205 mm eingezogen bzw. gestrafft werden kann.

Nach dieser Straffung fällt im allgemeinen der durch die pyrotechnische Ladung nur kurzzeitig erzeugte Druck ab, worauf durch das vom in den Sicherheitsgurt hineinfallenden Fahrzeuginsassen bewirkte Anziehen des Gurtes die Feststellanordnung auslöst und der Fahrzeuginsasse vom nunmehr gestrafften Gurt sicher festgehalten wird.

Das Ziel der vorliegenden Erfindung besteht darin, einen weiteren Gurtstraffer der eingangs genannten Gattung zur Verfügung zu stellen.

Zur Lösung dieser Aufgabe sind die Merkmale des kennzeichnenden Teils des Anspruchs 1 vorgesehen. Eine besonders bevorzugte Weiterbildung entnimmt man Anspruch 2.

Ein wesentlicher Gedanke der vorliegenden Erfindung ist also darin zu sehen, durch Variation der radialen Erstreckung des Bandlaufraumes an unterschiedlichen Stellen des Umfanges die auf den sich frei durch den Bandlaufraum erstreckenden Teil des Zugbandes wirkende Kraft zu variieren und insbesondere zu optimieren.

In der Ausgangsposition soll die radiale Erstreckung, d.h. der freihängende Teil des Zugbandes minimal sein, weil gerade am Beginn der Auslösung der pyrotechnischen Ladung ein starker Druckstoß erzeugt wird, dessen Auswirkungen auf das Drehmoment an der Antriebswelle bzw. Antriebsrolle durch die herabgesetzte Beaufschlagungsfläche des freihängenden Teils des Zugbandes herabgesetzt werden.

Sobald sich dann die Antriebswelle bzw. Antriebsrolle zu drehen beginnt, gelangt der frei durchhängende Teil des Zugbandes in eine zunehmend größere radiale Erstreckung aufweisende Bereiche des Bandlaufraumes, wodurch die effektive Druckbeaufschlagungsfläche des Zugbandes und damit die am Umfang der Antriebswelle bzw. Antriebsrolle erzeugte Kraft entsprechend erhöht wird. Die radiale Erstreckung und damit die von der Druckquelle erzeugte Kraft am Zugband soll ihr Maximum etwas vor der maximalen Einzugslänge von z.B. 140 mm erreichen.

Anschließend nimmt die radiale Erstreckung des Bandlaufraumes wieder stetig ab und entsprechend die auf den Sicherheitsgurt ausgeübte Zugkraft. In diesem Stadium der Bewegung erfolgt ein weiteres Einziehen des Sicherheitsgurtes nur dann, wenn der Fahrzeuginsasse beispielsweise eine besonders voluminöse und stark zusammendrückbare Kleidung trägt oder der Sicherheitsgurt vor dem Unfall besonders locker am Körper des Fahrzeuginsassen anlag.

Durch die Verringerung der radialen Erstreckung des Bandlaufraumes im Auszugsbereich zwischen 140 und 205 mm werden auch die baulichen Abmessungen des Gurtstraffers in radialer Richtung entsprechend reduziert, was angesichts der Tatsache, daß derartige Gurtstraffer auf kleinstem Raum unterzubringen sind, besonders vorteilhaft ist.

Weitere vorteilhafte Weiterbildungen der Erfindung sind durch die Ansprüche 3, 4 und 5 gekennzeichnet.

Durch diese Ausführungsformen der Erfindung werden die Drehlager der Antriebswelle bzw. Antriebsrolle weitgehend von Lagerkräften befreit, weil sich die Zugbänder auf diametral gegenüberliegenden Seiten der Antriebswelle bzw. Antriebsrolle in entgegengesetzten tangentialen Richtungen erstrecken und im wesentlichen mit dem gleichen Druck beaufschlagt werden.

Weiter braucht jedes flexible Zugband auf diese Weise nur die halbe Zugkraft wie bei Verwendung nur eines einzigen Zugbandes aufzunehmen.

Bei der Ausführungsform nach Anspruch 6 wird der von einer einzigen Druckquelle stammende Druck auf die beiden oder eventuell mehreren Bandlaufräume gleichmäßig verteilt. Erfindungsgemäß braucht also trotz Erhöhung der Zahl von flexiblen Zugbändern die Zahl der Druckquellen nicht erhöht zu werden.

Vorteilhafte praktische Ausführungsformen der Dichtwände sind durch die Ansprüche 7 bis 9 gekennzeichnet. Die gekrümmte Ausbildung der Dichtwände gewährleistet sowohl am Beginn als auch am Ende des Betriebs des Gurtstraffers ein knickfreies Anlegen der Zugbänder an den Dichtwänden. Hierzu sollen auch die an die Dichtwände anschließenden Umfangswände des Bandlaufraumes entsprechend abgerundet sein.

Eine weitere Ausführungsform nach Anspruch 10 hat den Vorteil, daß trotz der Abwicklung der Zugbänder von der Antriebswelle bzw. Antriebsrolle während des Betriebs die Dichtung zwischen den Dichtwänden und dem Umfang der aufgewickelten Zugbänder aufrechterhalten bleibt. Bei den Dichtelementen kann es sich um stabförmige Kunststoff- oder Gummielemente handeln.

Besonders kritisch ist bei Gurtstraffern mit dem Antrieb dienenden flexiblen Zugbändern die Einspannstelle im Bereich der Umfangswand des Bandlaufraumes am Gehäuse.

Um jede Gefahr eines Abreißens des Zugbandes an dieser Befestigungsstelle auszuschließen, ist die Ausführungsformen nach Anspruch 11 vorgesehen. Vorteilhafte Weiterbildungen entnimmt man den Ansprüchen 12 und 13.

Aufgrund dieser Ausbildung werden die beim Betrieb des Gurtstraffers auftretenden Zugkräfte von einem radial äußeren Ende des wirksamen Teils des Zugbandes auf das entsprechende Ende des wirksamen Teils des anderen flexiblen Zugbandes übertragen. Mit anderen Worten heben sich die entsprechenden Reaktionskräfte beider flexiblen Zugbänder gegeneinander auf, so daß ein Abreißen im Bereich von starren Befestigungsstellen am Gehäuse nicht mehr befürchtet werden muß.

Bei der Ausführungsform nach Anspruch 13 wird ein Teil des flexiblen Zugbandes zusätzlich noch zur Aufteilung des von einer einzigen Druckquelle stammenden Gasstromes auf beide Verzweigungsleitungen ausgenutzt.

Das erste Ausführungsbeispiel nach Anspruch 14 hat den Vorteil, daß auch in dem Zustand, wo in der Ausgangsposition die flexiblen Zugbänder satt auf den gekrümmten Flächen der Dichtwände aufliegen, der beim Zünden der Ladung erzeugte Druck sich - ohne daß das Band erst von der Dichtwand abheben muß - sofort über die gesamte radiale Erstreckung der Zugbänder verteilt.

Ein besonderes Problem bei derartigen Gurtstraffern besteht darin, daß nach Beendigung der Straffung der Gurt sich wieder ungehindert ausziehen lassen soll. Damit dieser Vorgang nicht durch den erfindungsgemäßen Gurtstraffer behindert wird, kann zum einen die Kupplung zwischen Gurtstraffer und Gurtaufwickelrolle ausgerückt werden. Eine wesentlich einfachere Lösung ist jedoch durch die Ansprüche 15 und 17 gekennzeichnet.

Mit anderen Worten ist der diesbezügliche Erfindungsgedanke darin zu sehen, daß zwar im Ausgangszustand des Gurtstraffers eine drehfeste Verbindung zwischen den aufgewickelten Zugbändern und der Antriebswelle bzw. Antriebsrolle gewährleistet ist. Nach der Gurtstraffung um einen beliebigen Weg und dem anschließenden Druckabfall sollen sich die flexiblen Zugbänder insbesondere durch Federkraft selbsttätig von der Antriebswelle bzw. Antriebsrolle lösen, so daß letztere ungehindert durch die sie umgebenden flexiblen Zugbänder frei in Ausziehrichtung gedreht werden kann. Das Aushängen der Zugbandenden wird also bevorzugt allein durch die Federspannung der aufgewickelten Zugbandbereiche herbeigeführt. Verhindert wird das Aushängen vor dem Druckabfall durch den bei der Auslösung auftretenden hohen Druck, der die Zugbänder unter eine solche Zugspannung setzt, daß ihre einzelnen Windungen so fest auf der Antriebswelle bzw. Antriebsrolle sitzen, daß die Bandenden in drehfesten Eingriff mit der Antriebswelle bzw. Antriebsrolle gedrückt werden. Vor der Auslösung wird die Zugspannung auf die Zugbänder durch geeignete Haltemittel wie Scherstifte zwischen der Antriebswelle bzw. Antriebsrolle und dem Gehäuse herbeigeführt, wodurch die Antriebswelle bzw. Antriebsrolle so lange in gespanntem Zustand gehalten wird, bis bei einer unfallbedingten Auslösung die Druckbeaufschlagung der Zugbänder stattfindet. Dann wird die Zugspannung durch den Druckaufbau herbeigeführt, der auch ausreichend groß ist, um die entsprechend dimensionierten Haltemittel außer Wirkung zu setzen. Ein Scherstift wird bei Auslösung einfach weggebrochen.

Erfindungsgemäß sind die Zugbänder in der Ausgangsposition drei- bis viermal um die Antriebswelle bzw. Antriebsrolle spiralförmig herumgewikkelt. Nach einer Gurtstraffung, d.h. in der Endposition, befinden sich auf der Antriebswelle bzw. Antriebsrolle nur noch ein bis zwei Windungen der Zugbänder.

Die Zugbänder bestehen vorzugsweise aus Federstahlblech mit einer Dikke zwischen 0,1 und 0,3 mm.

Damit das selbsttätige Aushängen der dem Antrieb dienenden Zugbänder auch dann vonstatten gehen kann, wenn sich die Aushängstelle gerade gegenüber einer Dichtwand befindet, sind die Ausführungsformen nach Anspruch 18 oder 19 zweckmäßig. Dabei wird das Wegklappen der Dichtwände in der Ausgangsposition durch das enge Anliegen der Zugbänder an den Dichtwänden und bei Zündung der pyrotechnischen Ladung durch den Druck in dem druckbeaufschlagten Teilraum verhindert. Erst dann, wenn der Druck am Ende der Gurtstraffung wieder abfällt, entfällt die die Dichtwände in ihrer Wirkposition haltende Kraft, so daß sie durch die Federkraft der aufgewickelten Zugbandbereiche und gegebenenfalls auch unter der Kraft einer eingebauten Feder in Richtung des druckbeaufschlagten Teilraumes wegklappen können und somit das selbsttätige radiale Aushängen der Zugbänder von der Antriebswelle bzw. Antriebsrolle nicht behindern.

Die Ausführungsform nach Anspruch 20 ist zweckmäßig, um beim Verschieben der Zugbänder innerhalb des Bandlaufraumes einen Druckaufbau in den von der Druckquelle abgewandten Teilräumen zu vermeiden. Aus diesem Grunde ist eine wirksame Entlüftung dieses Raumes beim Arbeiten des Zusatzantriebs in jedem Fall vorzusehen.

Weitere Vorteile und Ausgestaltungen der Erfindung sind durch die Ansprüche 21 bis 24 gekennzeichnet.

Die Erfindung wird im folgenden beispielsweise anhand der Zeichnung beschrieben; in dieser zeigt:
- Fig. 1: eine erste Ausführungsform eines mit einer zündbaren, pyrotechnischen Ladung arbeitenden Gurtstraffers in perspektivischer Explosionsdarstellung,
- Fig. 2: eine etwas vergrößerte perspektivische Darstellung der gleichen Ausführungsform eines Gurtstraffers in zusammengebautem Zustand in perspektivischer Ansicht von der entgegengesetzten Seite wie in Fig. 1,
- Fig. 3: eine mehr von der Seite des Zusatzantriebs her gesehene perspektivische Ansicht des gleichen Gegenstandes, wobei jedoch zum Zwecke der Veranschaulichung die eine stirnseitige Abdeckung des Bandlaufraumes und die Rückzugsfederanordnung fortgelassen sind, und zwar in der Ausgangsposition unmittelbar nach dem Beginn der Zündung der pyrotechnischen Ladung,
- Fig. 4: eine entsprechende Ansicht wie Fig. 3, jedoch während eines bereits in Gang befindlichen Gurtstraffvorganges,
- Fig. 5: eine Stirnansicht einer weiteren bevorzugten Ausführungsform eines einen Bandlaufraum enthaltenden Gehäuses eines Gurtstraffers bei abgenommener Stirnabdeckung,
- Fig. 5a: einen vergrößerten Ausschnitt aus Fig. 5 mit einer anderen Ausführungsform der lösbaren Befestigung der Dichtwände am Gehäuse,
- Fig. 6: einen Schnitt nach Linie VI-VI in Fig. 5,
- Fig. 7: eine vergrößerte Ausschnitts-Stirnansicht einer bevorzugten Ausbildung der Antriebsrolle eines erfindungsgemäßen Gurtstraffers im Bereich der Zugband-Einhängestelle,
- Fig. 8: einen vergrößerten Ausschnitt des mit einer Einhänge-Federzunge versehenen Endbereiches eines Zugbandes für das Einhängen in eine Umfangsvertiefung der Antriebsrolle nach Fig.7,
- Fig. 9: eine perspektivische Ansicht des erfindungsgemäßen Gurtstraffers analog den Fig. 3 und 4, wobei jedoch außer der Rückzugsfederanordnung auch noch der Zusatzantrieb bis auf die Antriebswelle und die Antriebsrolle weggelassen sind, wodurch das Innere der Kupplung zu erkennen ist, wobei die Kupplung im ausgerückten Normalzustand gezeigt ist,
- Fig. 10: eine Axialansicht einer ähnlichen Ausführungsform der Kupplung und der für sie vorgesehenen Antriebsmittel ebenfalls in der ausgerückten Position der Kupplung,
- Fig. 11: eine ähnliche perspektivische Ansicht wie Fig. 9, jedoch während des Einrückvorganges der Kupplung,
- Fig. 12: einen Teillängsschnitt der Ausführungsform nach Fig. 10, wobei außerdem die Gurtaufwickelrolle dargestellt ist,
- Fig. 13: eine Stirnansicht des Gegenstandes der Fig. 12 bei abgenommenem Zusatzantrieb, wobei auch diese Ausführungsformen die Kupplung während des Einrückvorganges, und zwar kurz vor der Freigabe der federnden Kupplungsscheibe dargestellt ist,
- Fig. 13a: einen Schnitt nach Linie XIIIa-XIIIa in Fig. 13,
- Fig. 14: eine ähnliche perspektivische Ansicht wie die Fig. 9 und 11, wobei die Kupplung im volleingerückten Zustand und die Ventilanordnung in der Umschaltstellung zur Beaufschlagung der Drehmomenterzeugungsvorrichtung gezeigt sind,
- Fig. 15: einen Teillängsschnitt analog Fig. 12, wobei jedoch die Kupplungsscheibe im volleingerückten Zustand wiedergegeben ist,
- Fig. 16: eine Stirnansicht der Kupplung von Fig. 15,
- Fig. 17: eine schematische Schnittansicht eines erfindungsgemäßen Zusatzantriebs analog Fig. 5, jedoch mit nur einem flexiblen Zugband und
- Fig. 18: eine schematische Schnittansicht analog Fig. 17 einer Ausführungsform der vorliegenden Erfindung mit zwei flexiblen Zugbändern.

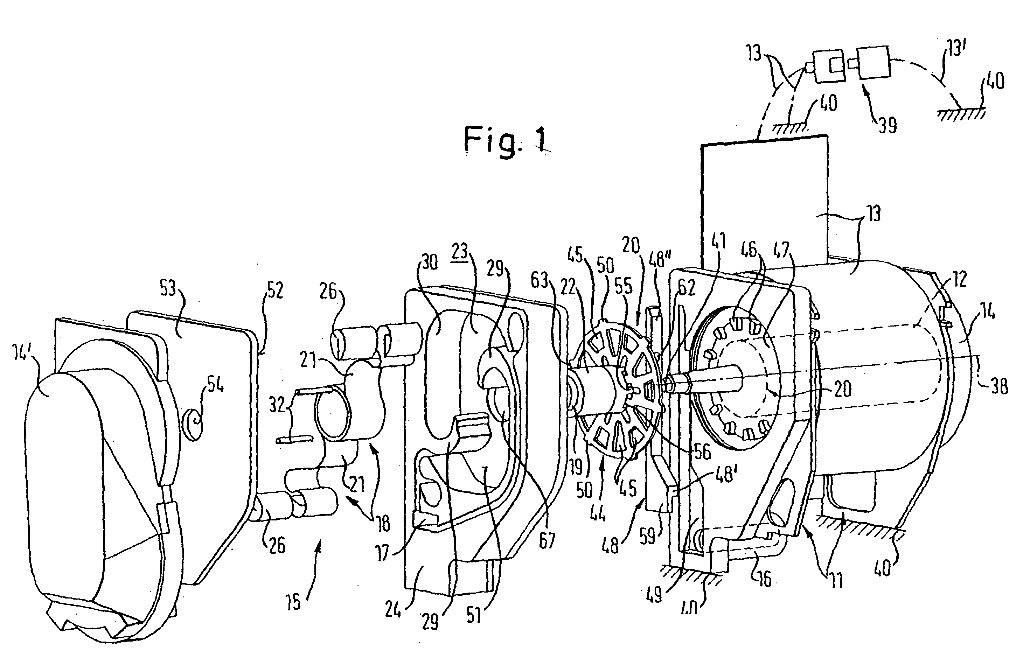

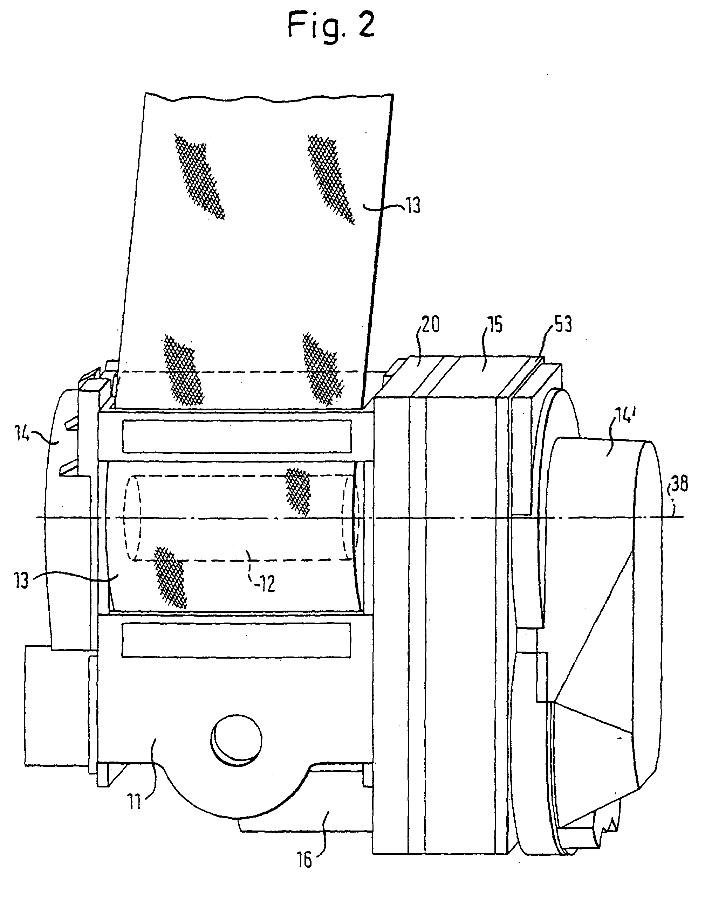

Nach den Fig. 1 und 2 besitzt ein Gurtstraffer einen beispielsweise im Bodenbereich eines Fahrgastraumes am Fahrzeugchassis 40 zu befestigenden Halter 11, an dem um eine zentrale Achse 38 drehbar eine Gurtaufwickelrolle 12 angebracht ist, auf die ein Sicherheitsgurt 13 aufgewickelt ist, der sich in der in Fig. 1 nur gestrichelt angedeuteten Weise über ein Gurtschloß 39 und z.B. ein Drahtseil 13' zu einer anderen Stelle des Fahrzeugchassis 40 erstreckt, wobei sich der Sicherheitsgurt 13 in üblicher Weise an den nicht dargestellten Körper eines Fahrzeuginsassen anlegt. Weiter ist rechts oben in Fig. 1 strichpunktiert angedeutet, daß der Sicherheitsgurt 13 auch Bestandteil einer Dreipunkt-Gurtanordnung sein kann.

An der einen Stirnseite der Gurtaufwickelrolle 12 befindet sich eine übliche Rückzugsfederanordnung 14, in der eine nicht dargestellte Rückzugsfeder vorgesehen ist, die auf die Gurtaufwickelrolle 12 ein leichtes Gurt-Einzugsdrehmoment ausübt, so daß der vom Fahrzeuginsassen ausgezogene und angelegte Sicherheitsgurt sich soweit auf die Gurtaufwickelrolle 12 aufrollt, daß er locker am Körper des Fahrzeuginsassen anliegt. Weiter ist insbesondere zwischen dem Halter 11 und der Gurtaufwickelrolle 12 eine übliche und nicht dargestellte Gurtauszugssperre vorgesehen, welche bei einem plötzlichen Anziehen des Sicherheitsgurtes 13 oder bei unfallbedingten Beschleunigungen wirksam wird und die Gurtaufwikkelrolle 12 in der dann vorliegenden Aus- bzw. Einzugsposition festlegt, so daß ein Ausziehen des Sicherheitsgurtes 13 verhindert ist.

Die Rückzugsfederanordnung kann auch an der in den Fig. 1 und 2 mit 14' bezeichneten Stirnseite der Gurtaufwickelrolle 12 bzw. des Halters 11 vorgesehen sein, wozu sich eine in Fig. 1 bei 41 angedeutete Innenwelle 41 drehbar durch entsprechende zentrale Bohrungen eines im folgenden zu beschreibenden Zusatzantriebs 15 und einer Kupplung 20 hindurcherstrecken muß. Die Anordnung der Rückzugsfederanordnung bei 14' hat den Vorteil, daß sowohl der normale als auch der Zusatzantrieb der Gurtaufwickelrolle 12 von der gleichen Stirnseite her erfolgen.

Nach den Fig. 1 und 2 sind zwischen der bevorzugt bei 14' angeordneten Rückzugsfederanordnung und dem Halter 11 bzw. der Gurtaufwickelrolle 12 ein Zusatzantrieb 15 und eine Kupplung 20 angeordnet, die im folgenden anhand der Fig. 2 bis 8 im einzelnen beschrieben werden.

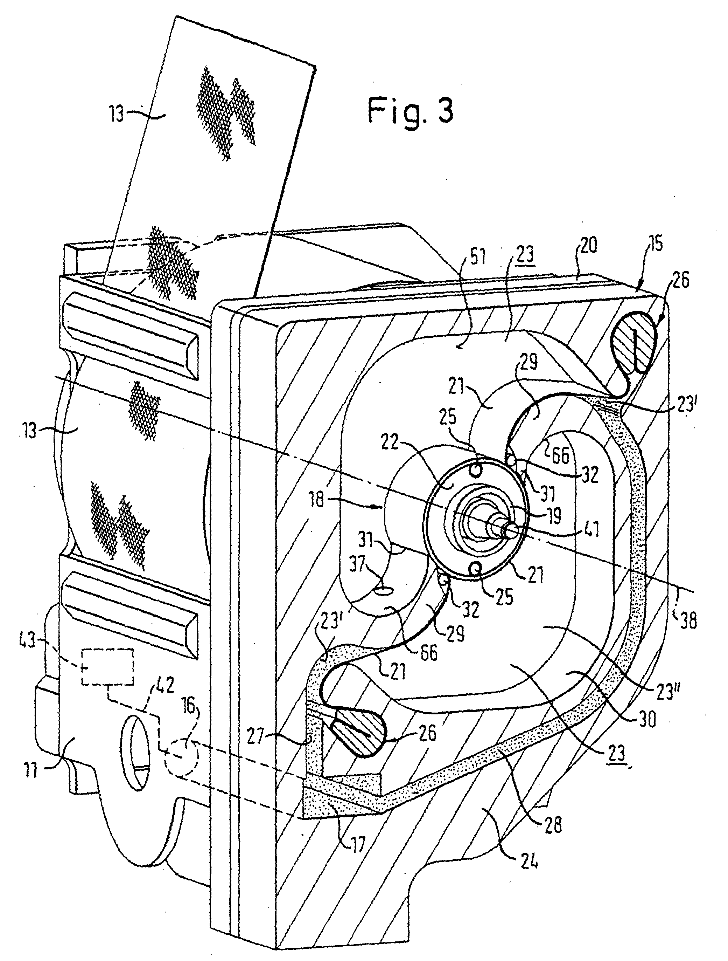

Nach Fig. 1 und 3 besitzt der Zusatzantrieb 15 eine mit der Drehachse 38 der Gurtaufwickelrolle 12 koaxiale Antriebswelle 19, auf der konzentrisch eine Antriebsrolle 22 drehfest befestigt ist. Auf die Antriebsrolle 22 sind in der Ansicht der Fig. 1,3 entgegen dem Uhrzeigersinn übereinander zwei aus Federstahlblech von etwa 0,2 mm Dicke bestehende Zugbänder 21 aufgewickelt, die an Befestigungsstellen 25 am Umfang der Antriebsrolle 22 drehfest mit dieser verbunden sind.

In der in Fig. 1, 3 dargestellten Ausgangsposition sind jeweils drei bis vier Lagen eines jeden Zugbandes 21 auf die Antriebsrolle 22 aufgewickelt. Danach erstreckt sich jedes Zugband 21 bogenförmig durch jeweils einen von zwei die Antriebsrolle 22 umgebenden Bandlaufräumen 23 zu jeweils einer Befestigungsstelle 26 am die Umfangswand 30 der Bandlaufräume 23 umgebenden Gehäuses 24.

Der bogenförmig ausgebildete Teil der Zugbänder 21 liegt mit seiner konkaven Fläche in der aus Fig.3 ersichtlichen Ausgangsposition des Gurtstraffers an in radialer Richtung gekrümmt ausgebildeten Dichtwänden 29 an, die mit dem Gehäuse 24 einstückig ausgebildet sind und sich sichelförmig im wesentlichen radial nach innen zu den auf die Antriebsrolle 22 aufgewickelten Lagen der Zugbänder 21 erstreckt und dort eine sich verjüngende Dichtlippe 31 bildet, die eine Dichtverbindung mit den aufgewickelten Zugbändern 21 gewährleistet.

Im Bereich der Dichtlippen 31 sind zwischen jeder Dichtwand 29 und dem daraufliegenden Zugband 21 stabförmige Dichtelemente 32 angeordnet, welche sich über die gesamte Tiefe der im wesentlichen ebene Stirnwände 51, 52 aufweisenden Bandlaufräume 23 erstrecken. Während die der Gurtaufwickelrolle 12 zugewandte ebene Stirnwand 51, die eine zentrale Durchgangsbohrung 67 besitzt, ebenso wie die Umfangswand 30 einen festen Bestandteil des Gehäuses 24 der Drehmomenterzeugungsvorrichtung 18 bildet, befindet sich die axial gegenüberliegende Stirnwand 52 nach Fig. 1 an einem Deckel 53, der auf die offene Seite des Gehäuses 24 aufsetzbar sowie an ihm befestigbar ist und eine zentrale Bohrung 54 für den Durchgang der Innenwelle 41 zur Rückzugsfederanordnung 14' aufweist. Die Breite der Zugbänder 21 ist so groß, daß sie dichtend und gleitend an den Stirnwänden 51, 52 anliegen und so die Bandlaufräume 23 in zwei durch die Zugbänder 21 gegeneinander abgedichtete Teilräume 23', 23" unterteilen.

Im Bereich der an der Umfangswand 30 befindlichen Wurzeln der Dichtwände 29 münden auf der konvexen Seite der Dichtwände 29 Verzweigungsleitungen 27 bzw. 28, die von einem gemeinsamen Druckraum 17 ausgehen, der von einer Druckquelle 16 beaufschlagbar ist. Die Druckquelle 16 ist über eine in Fig.3 gestrichelt angedeutete Steuerleitung 42 mit einem ebenfalls nur gestrichelt angedeuteten Beschleunigungssensor 43 verbunden, der bei einer unfallbedingten Fahrzeugbeschleunigung eine pyrotechnische Ladung in der Druckquelle 16 zündet, so daß im Druckraum 17 schlagartig ein Druck aufgebaut werden kann. Auf der konkaven Seite der Dichtwände 29 sind zur umgebenden Atmosphäre führende Entlüftungsöffnungen 37 vorgesehen, die beim Auslösen des Zusatzantriebes einen übermäßigen Druckaufbau in den Teilräumen 23" verhindern.

Die Verzweigungsleitungen 27, 28 münden derart an den Bandlaufräumen 23, daß sie die sich am Umfang der Bandlaufräume 23 quer über die Mündung der Verzweigungsleitungen 27, 28 erstreckenden Zugbänder 21 mit Druck beaufschlagen können.

Durch die beschriebene Anordnung wird eine Drehmomenterzeugungsvorrichtung 18 gebildet, welche bei Zündung der pyrotechnischen Ladung 16 die Antriebswelle 19, die zur Aufnahme der Innenwelle 21 hohl ausgebildet ist, in Gurtaufwickelrichtung antreibt, wie das weiter unten bei der Funktionsbeschreibung im einzelnen erläutert wird.

Zwischen dem Zusatzantrieb 15 mit der Drehmomenterzeugungsvorrichtung 18 und der Gurtaufwickelrolle 12 ist eine im folgenden anhand der Fig. 1 und 9 bis 16 beschriebene Kupplung 20 vorgesehen, die normalerweise ausgerückt ist, um ein ungehindertes Zusammenspiel zwischen der Rückzugsfederanordnung 14' und der Gurtaufwickelrolle 12 über die Innenwelle 41 zu gewährleisten. Erst dann, wenn eine unfallbedingte Beschleunigung auftritt und die Drehmomenterzeugungsvorrichtung 18 den Gurt 13 schlagartig straffen soll, muß die Kupplung 20 einrücken, um das Drehmoment auf die Gurtaufwickelrolle 12 übertragen zu können.

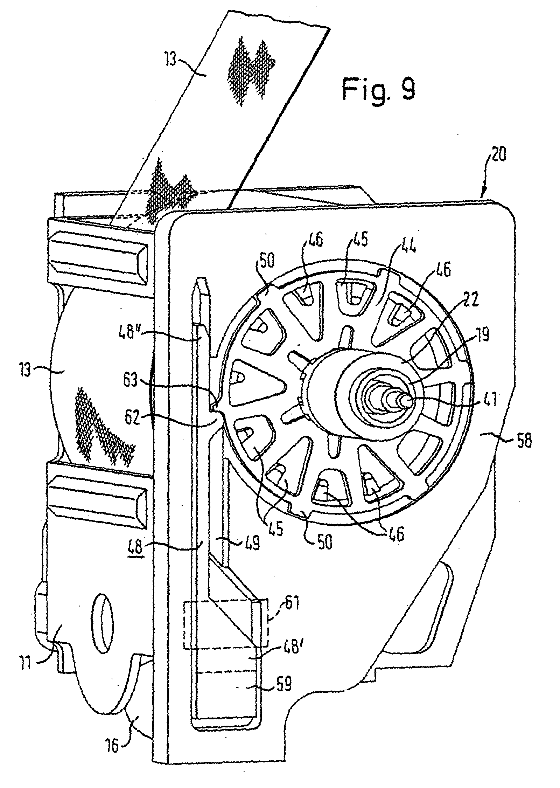

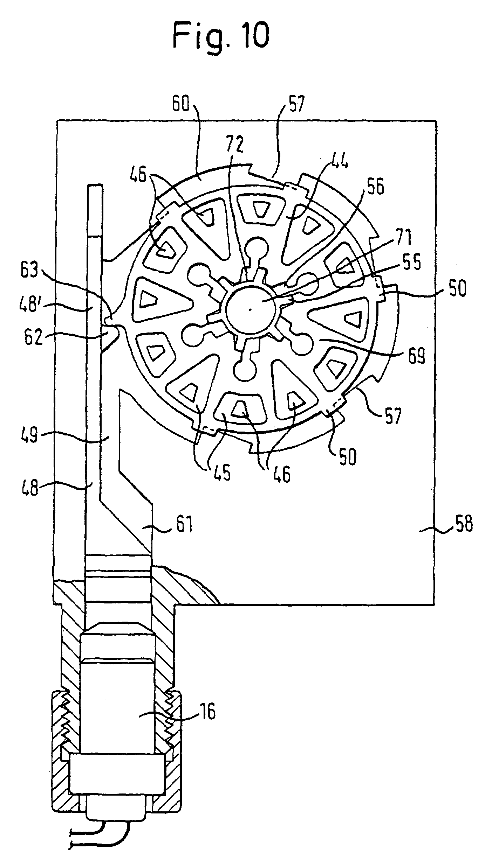

Nach den Fig. 1 und 9, 10 ist die Antriebsrolle 22 an ihrer von der Drehmomenterzeugungsvorrichtung 18 axial abgewandten Seite mit axial (Fig. 9) oder radial (Fig. 10) vorspringenden Keilnocken 55 versehen, welche in dazu komplementäre Umfangsschlitze 56 am Außenrand einer zentralen Bohrung 71 einer Kupplungsscheibe 44 derart eingreifen, daß in Umfangsrichtung zwar ein bestimmtes Spiel zwischen den Keilnocken 55 und den Umfangsberandungen der Umfangsschlitze 56 besteht, daß jedoch die Antriebsrolle 22 nach Überwindung dieses Spiels die Kupplungsscheibe 44 zu einer Drehbewegung mitnimmt.

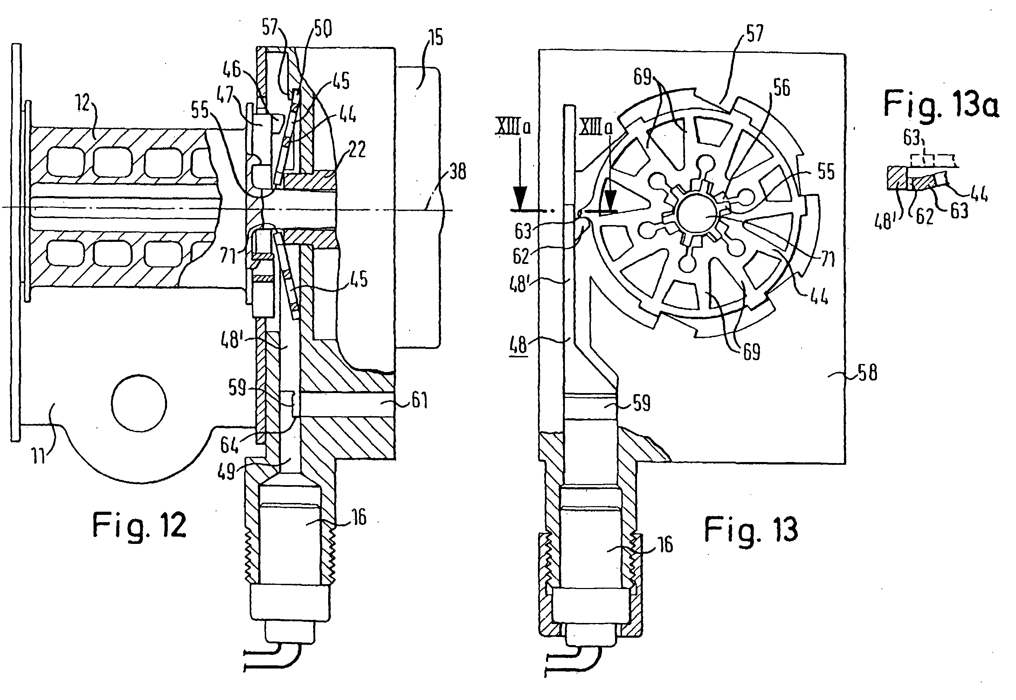

Auf ihrem Außenumfang weist die Kupplungsscheibe 44 nach den Fig. 1, 9 und 10 radial nach außen vorspringende und über ihren Umfang verteilte Haltenocken 50 auf, die nach den Fig. 10 und 12 hinter vom Kupplungsgehäuse 58 radial nach innen in den Aufnahmehohlraum 60 für die Kupplungsscheibe 44 vorspringende Gegennocken 57 greifen, derart, daß die von der Stirnrolle der Antriebsrolle 22 oder eines an ihr befestigten Zwischenstückes in Richtung der Gurtaufwickelrolle 12 vorgeschobene Kupplungsscheibe 44 radial außen zunächst gegen eine derartige Axialverschiebung festgehalten wird. Die aus federndem Material, insbesondere Federstahl bestehende Kupplungsscheibe 44 ist dabei gemäß Fig. 12 federnd konisch verformt.

Nach den Fig. 1, 9, 10 und 12 besitzt die Kupplungsscheibe in ihrem radial äußeren Bereich, jedoch radial innen von den Haltenocken 50 Eingriffsausnehmungen 45, die über den Umfang gleichmäßig verteilt sind. Diesen Eingriffsausnehmungen 45 sind an der der Drehmomenterzeugungsvorrichtung 18 axial zugewandten Stirnführungsscheibe 47 der Gurtaufwikkelrolle 12 axial vorstehende Eingriffsnocken 46 zugeordnet, die jedoch in der Position der Kupplungsscheibe 44, wo ihre Haltenocken hinter die Gegennocken 57 greifen, außer Eingriff mit den Eingriffsausnehmungen 45 sind (Fig. 12).

Aufgrund der beschriebenen Anordnung befindet sich die Kupplungsscheibe 44 normalerweise in der aus Fig. 12 ersichtlichen ausgerückten Position, so daß die Gurtaufwickelrolle 12 sich ungehindert von der Antriebsrolle 22 frei drehen kann und nur mit der Rückzugsfederanordnung 14' über die Innenwelle 41 zusammenwirkt, die sich durch die Bohrungen 67, 71 und 72 erstreckt.

Um die Kupplung 20 einzurücken, ist nach den Fig. 1, 9 und 10 neben der Kupplungsscheibe 44 im Kupplungsgehäuse 58 eine Verschiebeausnehmung 49 angeordnet, die im wesentlichen tangential zur Kupplungsscheibe 44 verläuft. In der Verschiebeausnehmung 49 ist ein ebenfalls tangential verlaufender und in der Verschiebeausnehmung 49 tangential zur Kupplungsscheibe 44 verschiebbarer Schieber 48 angeordnet.

Der Schieber 48 weist oben eine Betätigungsstange 48" und unten einen erweiterten Kolbenbereich 48' mit einer abbrechbaren Ventilwand 59 auf. Unterhalb der unteren Stirnseite des Kolbenbereiches 48' befindet sich die pyrotechnische Ladung 16. Von der Verschiebeausnehmung 49 zweigt in Richtung der Drehmomenterzeugungsvorrichtung 18 ein Druckkanal 61 ab (Fig. 12), der mit dem Druckraum 17 in Strömungsverbindung steht.

Bei in der Ausgangsposition befindlichem Schieber 48 (Fig.9, 10) versperrt der Kolbenbereich 48' die Verbindung zwischen der pyrotechnischen Ladung 16 und dem Druckkanal 61.

Im oberen Bereich radial gegenüber der Kupplungsscheibe 44 besitzt die Betätigungsstange 48" des Schiebers 48 einen in Richtung auf die Kupplungsscheibe 44 vorspringenden Anschlag 62, der mit einem am Umfang der Kupplungsscheibe 44 vorgesehenen Gegenanschlag 63 gemäß Fig.9 und 10 derart in Eingriff steht, daß bei einem Verschieben des Schiebers 48 nach oben die Kupplungsscheibe 44 im Uhrzeigersinn verdreht wird.

Die im allgemeinen zylindrisch ausgebildete pyrotechnische Ladung 16 kann gemäß den Fig. 1 bis 4 und 9 auf der der Gurtaufwickelrolle 12 zugewandten Seite der Kupplung 20 parallel zu und unter der Gurtaufwikkelrolle 12 oder aber gemäß Fig. 10 in axialer Verlängerung der Verschiebeausnehmung 49 unterhalb der Kupplung 20 angeordnet sein. Wesentlich ist lediglich, daß bei Zündung der pyrotechnischen Ladung 16 zunächst nur der Schieber 48 und erst nach Einrücken der Kupplung 20 auch die Drehmomenterzeugungsvorrichtung 18 mit Druck beaufschlagt wird.

Die Arbeitsweise des betriebenen Gurtstraffers ist wie folgt:

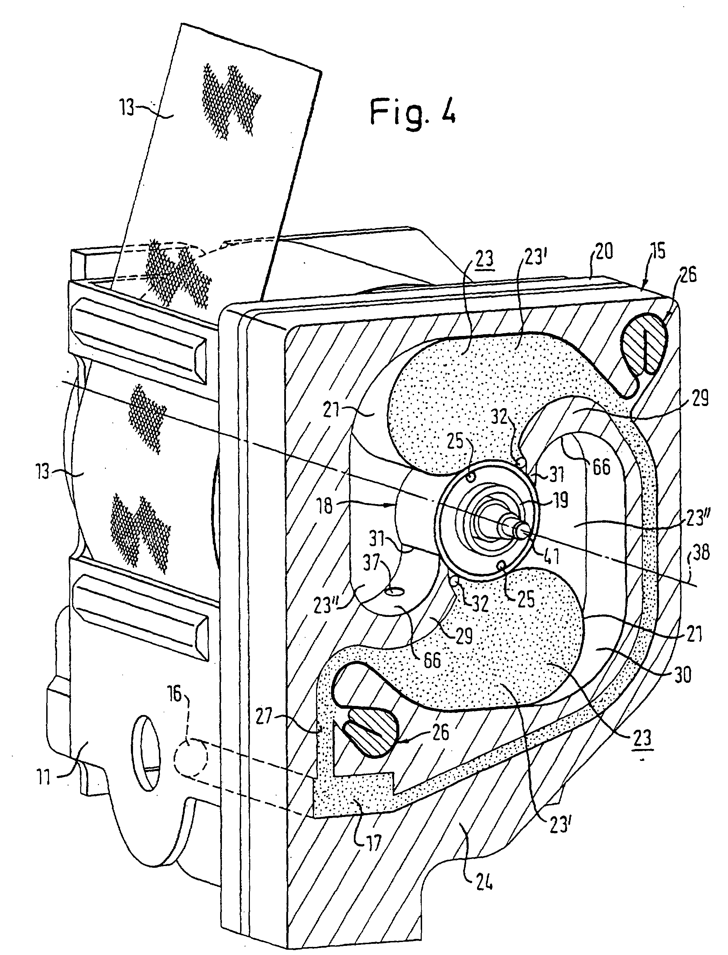

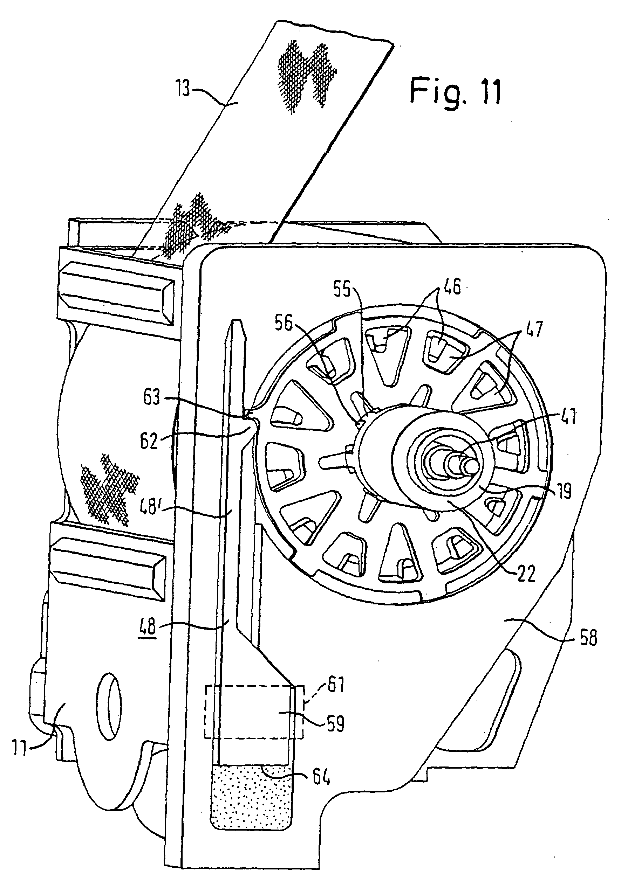

Wenn der Beschleunigungssensors 43 (Fig. 3) eine unfallbedingte Beschleunigung am Fahrzeug feststellt, löst er über die Steuerleitung 42 die pyrotechnische Ladung 16 aus. Daraufhin beaufschlagt diese zunächst nicht, wie das in den Fig. 3 und 4 aus Veranschaulichungsgründen wiedergegeben ist, die Drehmomenterzeugungsvorrichtung 18, sondern nach Fig.9 und 10 zunächst nur den Kolbenbereich 48' des Schiebers 48, so daß dieser aus der Position nach den Fig. 9, 10 in die nach den Fig. 11 bis 13 verschoben wird und dabei die Kupplungsscheibe 44 zu einer Drehbewegung mitnimmt.

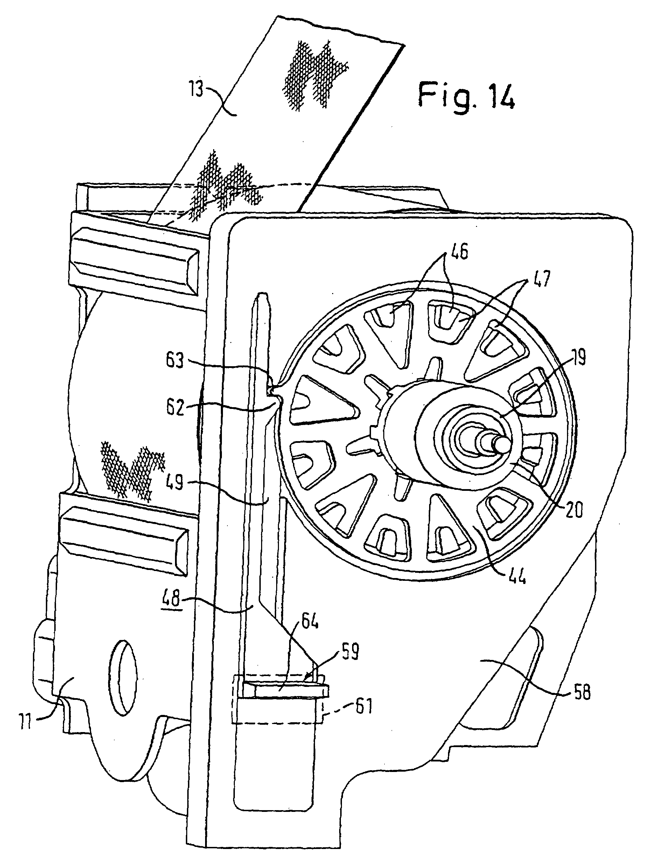

Dadurch verschieben sich die Haltenocken 50 der Kupplungsscheibe 44 in Umfangsrichtung entlang der feststehenden Gegennocken 57, bis sie in der Position nach den Fig. 14 bis 16 außer Eingriff miteinander kommen.

Der Verschiebeweg des Schiebers 48 und die Drehbewegung der Kupplungsscheibe 44 sind so berechnet, daß im ersten Stadium der Bewegung die Haltenocken 50 und die Gegennocken 57 außer Eingriff kommen, worauf die Kupplungsscheibe 44 in Richtung der Stirnführungsscheibe 47 schnappt. Hierbei können die Eingriffsnocken 46 in die Eingriffsausnehmungen 45 eingreifen, wenn diese beiden Elemente zufällig axial ausgerichtet sein sollten. Sofern dies noch nicht der Fall sein sollte, legen sich die Stege 69 der Kupplungsscheibe 44 an die Eingriffsnocken 46 an. Nunmehr wird die Kupplungsscheibe 44 in einem zweiten Stadium der Bewegung des Schiebers 48 weitergedreht, bis schließlich die Eingriffsausnehmungen 45 über die Eingriffsnocken 46 schnappen.

Die Umfangsschlitze 56 im Bereich der Zentralbohrung 72 müssen eine die beiden Bewegungsstadien ermöglichende Drehung der Kupplungsscheibe 44 relativ zur Antriebsrolle 22 bzw. den Keilnocken 55 zulassen.

Aufgrund der beschriebenen Ausbildung der Kupplung 20 mit zahlreichen über den Umfang verteilten Eingriffsausnehmungen 45 und Eingriffsnokken 46 wird dem Erfordernis der Übertragung erheblicher Drehmomente über die Kupplung 20 Rechnung getragen.

Im einzelnen geht das Einrücken der Kupplung 20 wie folgt vor sich:

Wie aus Fig. 1 hervorgeht, dreht der beim Zünden der Ladung 16 tangential vorgeschobene Schieber 48 die Kupplungsscheibe 44 zwecks Eingriffs mit der Stirnführungsscheibe 47 genau in der entgegengesetzten Richtung, wie die Kupplungsscheibe 44 anschließend durch die Drehmomenterzeugungsvorrichtung 18 gedreht wird. Diese entgegengesetzten Drehrichtungen sind wichtig, damit beim Verdrehen der Kupplungsscheibe 44 nicht durch Reibung oder formschlüssigen Eingriff die Antriebswelle 19 bzw. die Antriebsrolle 22 mitgedreht wird. In der Grundposition vor der Auslösung der pyrotechnischen Ladung 16 muß die Kupplungsscheibe 44 relativ zur Antriebsrolle 22 so stehen, daß der gesamte, durch die Umfangsschlitze 56 zur Verfügung gestellte freie Drehbereich der Kupplungsscheibe 44 relativ zur Antriebsrolle 22 zur Verfügung steht.

Ein besonders wichtiger Gesichtspunkt der Erfindung besteht darin, wie dafür gesorgt wird, daß die Eingriffsausnehmungen 45 und die Eingriffsnocken 46 bei einem Einrückvorgang der Kupplung 20 sicher in Eingriff kommen.

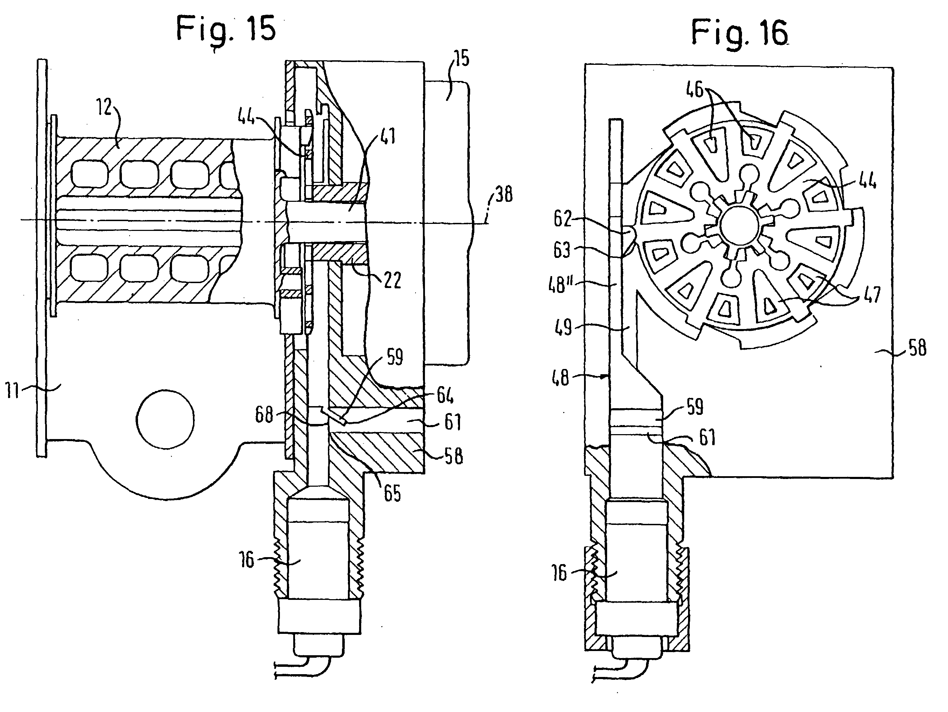

Zu diesem Zweck ist die Ausbildung so, daß der Anschlag 62 am Schieber 48 und der Gegenanschlag 63 an der Kupplungsscheibe 44 solange in Eingriff bleiben, bis die Kupplungsscheibe 44 über die Eingriffsnocken 46 geschnappt ist. Mit anderen Worten bleiben die Anschläge 62, 63 auch dann noch in Eingriff, wenn sich die Haltenocken 50 beim Drehen der Kupplungsscheibe 44 durch den Schieber 48 von den Gegennocken 57 am Kupplungsgehäuse 58 gelöst haben. In diesem Fall schnappt die federnde Kupplungsscheibe 44 aus der in Fig. 12 ersichtlichen konischen Position zwar etwas in Richtung der Gurtaufwickelrolle 12, jedoch nur so weit, daß - wenn die Eingriffsnocken 46 und die Eingriffsausnehmungen 45 noch nicht axial ausgerichtet sind - die Stege 69 zwischen den Eingriffsausnehmungen 45 auf den Eingriffsnocken 46 zur Anlage kommen. Der Anschlag 62 am Schieber 48 ist nun in Richtung der Federbewegung der Kupplungsscheibe 44 so breit ausgebildet, daß er auch dann noch in Eingriff mit dem Gegenanschlag 63 bleibt, wenn der Bajonettverschluß 50, 57 gelöst und die Stege 69 an den Eingriffsnocken 46 zur Anlage kommen. Auf diese Weise wird nun durch den fortgesetzten Vorschub des Schiebers 48 die Kupplungsscheibe 44 weitergedreht, bis die Eingriffsausnehmungen 45 über die Eingriffsnocken 46 schnappen. Nunmehr nimmt die Kupplungsscheibe 44 die aus Fig. 15 ersichtliche ebene Form an, die in Fig. 13a gestrichelt dargestellt ist. In dieser Position ist nun der Gegenanschlag 63 axial vom Anschlag 62 der Betätigungsstange 48' abgehoben, so daß der Schieber 48 und die Kupplungsscheibe 44 nunmehr außer Eingriff sind und der Schieber 48 jetzt ohne Arbeitsleistung nur noch so weit bis zum Ende des Verschiebeweges vorgeschoben wird, bis die Ventilwand 59 sich vor dem Druckkanal 61 befindet und dann durch den Druck der Druckquelle 16 abgebrochen wird, um den Strömungsweg von der Druckquelle 16 zum Druckraum 17 freizumachen.

Die Erfindung führt also nicht nur zu einer gegenseitigen Annäherung der beiden Kupplungsteile 44, 47, sondern sichert auch einen einwandfreien Klaueneingriff. In Fig. 13a ist die Bewegungsrichtung der radial äußeren Bereiche der Kupplungsscheibe 44 beim Aufschnappen der Eingriffsausnehmungen 45 über die Eingriffsnocken 46 durch einen Pfeil angedeutet.

Aufgrund der erfindungsgemäßen Ausbildung wird gewährleistet, daß die Kupplung 20 sicher eingerückt ist, bevor die Drehmomenterzeugungsvorrichtung 18 mit dem Druck der Druckquelle 16 beaufschlagt wird.

Der besondere Vorteil der Verwendung einer federnden Kupplungsscheibe, die nach Art einer Tellerfeder ausgebildet ist, besteht darin, daß sie kaum axialen Bauraum benötigt und gleichwohl ein sicheres Aus- und Einrükken der Kupplung 20 ermöglicht.

Aufgrund der ihr innewohnenden Federeigenschaften schnappt also die zunächst gemäß Fig. 12 konisch verformte Kupplungsscheibe 44 schließlich in die aus den Fig. 15 und 16 ersichtliche ebene Position, in welcher die Eingriffsnocken 46 in die Eingriffsausnehmungen 45 axial eingreifen und so eine gegebenenfalls etwas Umfangsspiel aufweisende, drehfeste Verbindung zwischen der Antriebsrolle 22 und der Gurtaufwickelrolle 12 herstellen.

In dieser am weitesten vorgeschobenen Position des Schiebers 48 hat sich die abbrechbare Ventilwand 59 gerade vor den Eingang des Druckkanals 61 geschoben (Fig. 11, 12).

Wichtig ist nun, daß der untere Rand 64 der Ventilwand 59 sich in der oberen Endposition des Schiebers 48 etwas oberhalb der unteren Begrenzung 65 des Druckkanals 61 befindet, wodurch aufgrund des in der Verschiebeausnehmung 49 erzeugten Explosionsdruckes in Richtung des Druckkanals 61 ein solcher Druck auf die abbrechbare Ventilwand 59 ausgeübt wird, daß diese in den Druckkanal 61 hinein abbricht, wie das in den Fig. 14 und 15 dargestellt ist.

Nunmehr kann sich der von der pyrotechnischen Ladung 16 erzeugte Explosionsdruck über den Druckkanal 61 in dem Druckraum 17 und von diesem aus durch die Verzweigungsleitungen 27, 28 in die Teilräume 23' ausbreiten (Fig. 3).

Der Druckaufbau ist in den Fig. 3 und 4 durch eine Punktung der betreffenden Räume angedeutet.

Aufgrund des Druckaufbaus in den Verzweigungsleitungen 27, 28 wird auf die konkave Seite der Zugbänder 21 eine entsprechende Druckkraft ausgeübt, welche ein Drehmoment an der Antriebsrolle 22 in Fig. 3 entgegen dem Uhrzeigersinn bewirkt.

Hierdurch dreht sich die Antriebsrolle 22, während sich das abgerollte Zugband 21 zunehmend dicht an die Umfangswand 30 der beiden Bandlaufräume 23 anlegt.

Da der frei durchhängende Bereich des Zugbandes 21 aufgrund der speziellen Ausbildung der Bandlaufräume 23 nach Fig.4 zunächst vergleichsweise kurz ist, ist die auf das Band übertragene Druckkraft zunächst ebenfalls noch relativ klein.

Erweitert sich dann aber der Bandlaufraum 23, wie das in Fig.4 gezeigt ist, vergrößert sich die effektive durchhängende Fläche des Zugbandes 21, wodurch die auf es ausgeübte Druckkraft entsprechend ansteigt und damit das auf die Antriebsrolle 22 ausgeübte Drehmoment.

Im weiteren Verlauf der Bewegung gelangt dann der bogenförmige Teil des Zugbandes 21 in den wieder schmaler werdenden Endbereich der Bandlaufräume 23, wodurch am Schluß der Gurtstraffung schließlich wieder eine geringere Antriebskraft auf die Antriebsrolle 22 ausgeübt wird.

Am Schluß der Bewegung liegt der gekrümmte Teil des Zugbandes 21 an dem konkav gekrümmten Endbereich 66 der Bandlaufräume 23 an. Nunmehr ist der Bewegungsspielraum der Zugbänder 21 erschöpft und der Gurt 13 um den Maximalwert von beispielsweise 205 mm eingezogen.

Bei der Position der Zugbänder 21 gemäß Fig. 4 beträgt die bis dahin eingezogene Länge des Sicherheitsgurtes 13 ca. 140 mm.

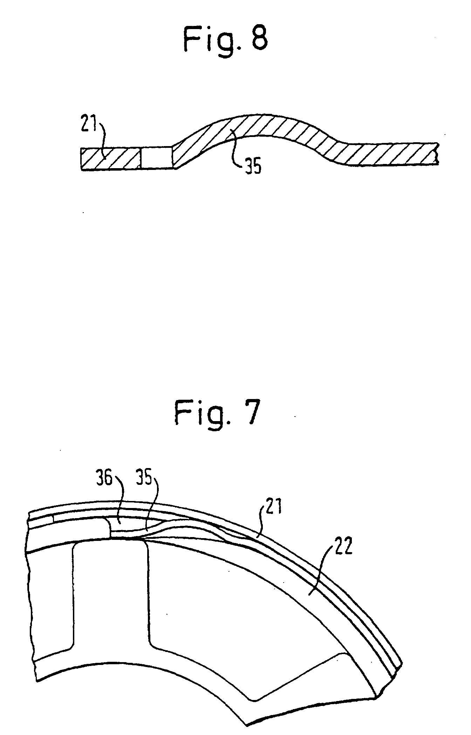

Wenn nun die Druckkraft in den Teilräumen 23' wegen des Verbrauchs der pyrotechnischen Ladung abfällt, werden die noch auf der Antriebsrolle 22 befindlichen vorzugsweise ein bis zwei Windungen des aus Federstahl bestehenden Zugbandes 21 locker, worauf die gemäß Fig. 7 durch den auf das Zugband 21 ausgeübte Zugkraft in eine Umfangsvertiefung 36 hineingedrückte Federzunge 35 aufgrund der ihr innewohnenden Federkraft die losen Lagen des Zugbandes 21 nach außen drückt und eine aus Fig. 8 ersichtliche entspannte Position einnimmt, in der der Mitnahmeeingriff zwischen dem mit der Federzunge 35 ausgestatteten Ende des Zugbandes 21 und der Antriebsrolle 22 aufgehoben ist.

Nunmehr kann sich die Antriebsrolle 22 bei geschlossen bleibender Kupplung 20 unter dem Einfluß von Auszugs- und Einzugsbewegungen des Sicherheitsgurtes 13 ungehindert mitdrehen. Dadurch ist nach wie vor die normale Funktion des Gurtaus- und -einrollmechanismus mittels der Rückzugsfederanordnung 14' gewährleistet.

Wenn der Gurt 13 beispielsweise in der Position nach Fig.4 oder bei noch weiter abgerollten Zugbändern 21 optimal gestrafft ist und der Druck der pyrotechnischen Ladung 16 nachläßt, vollzieht die nicht dargestellte Feststellanordnung zwischen dem Halter 11 und der Gurtaufwickelrolle 12 nach wie vor die Sperrung einer Auszugsbewegung, was wichtig ist, weil ja der Fahrzeuginsasse nach der schlagartigen Straffung des Gurtes 13 in diesen hineinfällt und ein Ausziehen des Gurtes dabei sicher verhindert werden muß.

Die Erfindung schafft somit einen äußerst kompakten Gurtstraffer, bei dem mittels ein- und derselben pyrotechnischen Ladung zunächst das Einrücken der Kupplung und dann das Straffen des Gurtes gewährleistet wird.

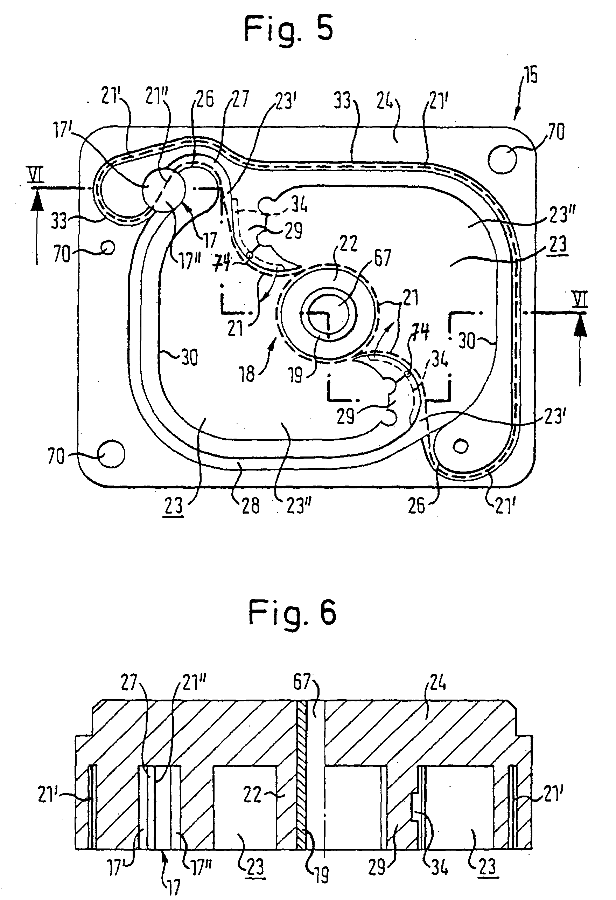

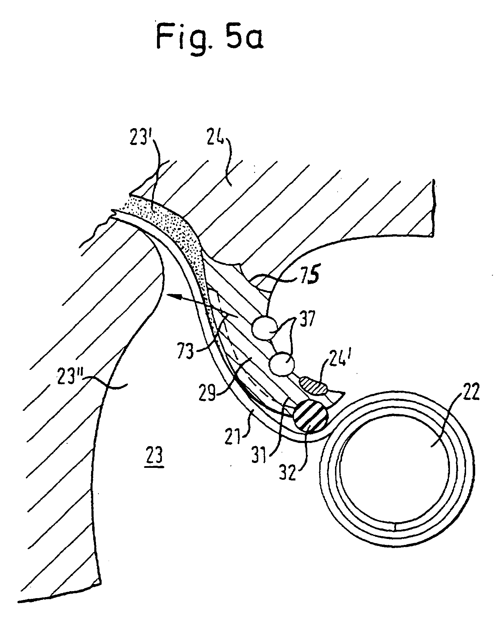

Die Ausführungsform nach Fig. 5 und 6 unterscheidet sich von der nach den Fig. 1 bis 4 dadurch, daß die beiden nur gestrichelt angedeuteten Zugbänder 21 zu einem einzigen durchgehenden Band vereinigt sind und außerhalb der Befestigungsstellen 26 am Gehäuse durch einen Bandkanal 33 geführt sind.

Aus diesem Grunde werden die bei einer Druckbeaufschlagung der Drehmomenterzeugungsvorrichtung 18 an den Zugbändern 21 auftretenden Kräfte im Bereich der Befestigungsstellen 26 nur insoweit auf das Gehäuse 24 übertragen, als die das Band 21 aufnehmenden Kanäle gekrümmt sind. Die eigentlichen Reaktionskräfte heben sich innerhalb des im Druckkanal 33 befindlichen Bandbereiches 21' auf.

Nach Fig. 5 wird im Bereich der Befestigungsstelle 26 oben links das Zugband 21 quer durch einen zylindrischen Druckraum 17 hindurchgeführt, wodurch der diesen Druckraum 17 durchquerende Bereich 21" des Zugbandes 21 den Raum in zwei Teilräume 17', 17" aufteilt.

Der im Druckkanal 33 verlaufende Bereich 21' des Zugbandes 21 dient lediglich der gegenseitigen Abstützung der sich in den Bandlaufräumen 23 befindenden Teile der Zugbänder 21.

Gemäß Fig. 5 kann an der konvexen Seite der Dichtwände 29 noch eine Nut 34 vorgesehen sein, welche gewährleistet, daß sich am Beginn des Betriebs, wo die Zugbänder 21 noch dicht auf der konvexen Seite der Dichtwände 29 aufliegen, der vom Druckraum 17 kommende Druck sich sofort über die gesamte radiale Erstreckung der Zugbänder 21 ausbreitet.

In Fig. 5 ist auch noch gezeigt, daß ein radial innenliegender Bereich der Dichtwände 29 um ein Gelenk 74 in Pfeilrichtung am anderen Teil angebracht sein kann.

Hierdurch kann nach einer Auslösung der wegklappbare innere Dichtwandbereich weggeklappt werden, wodurch das anhand der Fig. 7, 8 beschriebene selbsttätige Aushängen der Bandenden aus den Umfangsausnehmungen in der Antriebsrolle 22 auch im Bereich der Dichtwände 29 nicht behindert wird.

Damit der radial innere Teil der Dichtwände 29 nach Fig.5 bei Druckabfall im Anschluß an eine Straffung in Richtung der Pfeile wegklappt, muß zwischen den beiden zueinander klappbaren Teilen der Dichtwand 29 eine nicht dargestellte Spreizfeder vorgesehen sein.

Eine solche Spreizfeder kann bei dem Ausführungsbeispiel nach Fig. 5a vermieden werden, indem die Dichtwände 29 über eine geeignet geformte Trennstelle 75 und über einen gehäusefesten Anschlag 24' durch die Zugspannung des daraufliegenden Zugbandes 21 festgehalten wird. Aufgrund dieser Ausbildung werden die Dichtwände 29 im Normalzustand durch geeignete Verspannung der Antriebsrolle 22 von dem unter Zugspannung stehenden Zugband 21 gegen die Trennstelle 75 und den Anschlag 24' gedrückt.

Bei einer Zündung der pyrotechnischen Ladung drückt der dann in dem Teilraum 23' vorhandene Druck die Dichtwände 29 gegen die Trennstelle 75 und den Anschlag 24'. Erst wenn dann die Zugbänder 21 weitgehend von der Antriebsrolle 22 abgewickelt sind und der Druck in den Teilräumen 23' wieder abfällt, drücken die sich jetzt entspannenden Lagen der Zugbänder 21 auf der Antriebsrolle 22 gegen die Dichtwände 29, so daß diese entlang der Trennstelle 75 und des Anschlags 24' in Richtung des Pfeiles 73 gleiten und somit die Entspannung der Lagen der Zugbänder 21 auf der Antriebsrolle 22 nicht behindern. Auf diese Weise können sich die auf dem Umfang der Antriebsrolle 22 drehfest eingehängten Enden der Zugbänder 21 selbsttätig federnd aus den Vertiefungen, in die sie eingehängt sind, auch dann lösen, wenn diese Einhängestellen sich gerade gegenüber der Dichtlippe 31 einer Dichtwand 29 befinden.

Der Erfindungsgedanke dieser Ausführungsform ist also darin zu sehen, daß die Dichtwände 29 derart lösbar am Gehäuse 24 angebracht sind, daß sie durch das unter Zugspannung stehende Zugband 21 oder den Druck im Teilraum 23' in ihrer Sollage gehalten werden, jedoch bei nicht mehr aufliegendem Zugband 21 und abfallendem Druck durch die sich entspannenden Windungen der Zugbänder 21 auf der Antriebsrolle 22 selbsttätig vom Gehäuse 24, 24' lösen.

Die in Fig. 5 dargestellten Befestigungsbohrungen 70 dienen zum axialen Verspannen der einzelnen Gehäuse von Zusatzantrieb 15, Kupplung 20 und Rückzugsfederanorddnung 14' sowie des Gestells 11 der Gurtaufwikkelrolle 12.

Durch die erfindungsgemäße Ausbildung kann die Straffung des Sicherheitsgurtes um 140 bis 205 mm in etwa 10 msec nach Auslösung der pyrotechnischen Ladung erreicht werden.

Die Zugbänder 21 sind in der Ausgangsposition drei- bis viermal um die Antriebswelle 19 bzw. Antriebsrolle 22 herumgewunden. Durchmesser der Antriebswelle 19 bzw. Antriebsrolle 22 und Zahl der Windungen der Zugbänder 21 darauf hängen von der gewünschten Auszugslänge bei Straffung ab. Außerdem ist darauf zu achten, daß, nachdem die Bandschlaufen den Bandlaufraum 23 vollständig durchlaufen haben, noch ein bis zwei Windungen auf der Antriebswelle 19 bzw. Antriebsrolle 22 vorhanden sind, damit das selbsttätige Aushängen der Bandenden aus der Umfangsvertiefung 36 (Fig. 7) nicht vorzeitig erfolgt. Die mindestens ein bis zwei Windungen auf der Antriebswelle 19 bzw. der Antriebsrolle 22 sind also nötig, um, solange Zug auf den Zugbändern 21 ist, die Federzunge 35 oder ein sonstiges Einhängeglied sicher in eine entsprechende Vertiefung 36 der Antriebswelle 19 bzw. Antriebsrolle 22 sicher hineinzudrücken.

Während grundsätzlich statt zweier diametral gegenüberliegender Zugbänder 21, die auf ein und dieselbe Antriebswelle 19 bzw. Antriebsrolle 22 wirken, auch mehrere derartige Anordnungen über den Umfang verteilt verwendet werden könnten, kommt aus baulichen Gründen eine Verwendung von mehr als vier über den Umfang verteilten Zugbändern 21 mit entsprechenden Dichtwänden 29 nicht in Betracht. Optimal ist auf jeden Fall die Verwendung von zwei diametral gegenüberliegenden Zugbändern 21 mit entsprechenden Dichtwänden 29, weil bereits hierdurch die Lagerkräfte an der Antriebswelle 19 bzw. Antriebsrolle 22 weitgehend beseitigt werden.

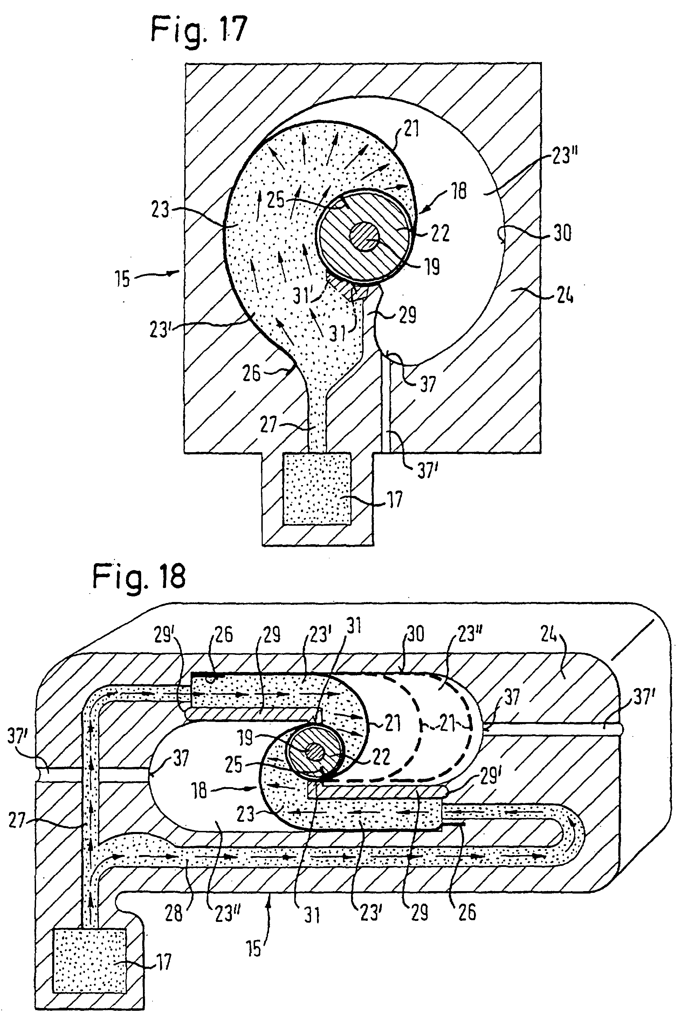

Beim Ausführungsbeispiel nach Fig. 17 erstreckt sich das flexible Zugband 21 mit dem gleichen Krümmungssinn, den es auf der Antriebsrolle 22 aufweist, durch den Bandlaufraum 23 zur radial der Antriebsrolle 22 gegenüberliegenden, vorzugsweise zur Antriebswelle 19 konzentrischen Umfangswand 30, wo es im Bereich der Mündung einer Explosionsdruck-Zuleitung 27' im Bandlaufraum 23 bei 26 am Gehäuse 24 befestigt ist.

Zwischen dem Gehäuse 24 und dem Umfang der Antriebsrolle 22 bzw. des darauf aufgewickelten Zugbandes 21 erstreckt sich im wesentlichen parallel zu der Zuleitung 27' und nahe dieser eine Dichtwand 29 zum Umfang der Antriebsrolle 22, wo eine Dichtlippe 31 vorgesehen ist, die am aufgewickelten Zugband 21 dichtend anliegt. Auf diese Weise werden die Teilräume 23', 23" druckmäßig voneinander entkoppelt. Am in Ausbreitungsrichtung des flexiblen Zugbandes 21 peripheren Ende des Bandlaufraums 23 befindet sich außer der Dichtwand 29 auch die Entlüftungsbohrung 37, die über einen Entlüftungskanal 37' in die umgebende Atmosphäre führt.

Wie in Figur 17 strichpunktiert und in feiner Schraffierung angedeutet ist, weist die Dichtwand 29 zum Teilraum 23' hin vorzugsweise einen Fortsatz 31' auf, so daß die Dichtlippe 31 in Richtung des Druckraumes 23' etwas verlängert ist. Der Fortsatz 31' ist flexibel ausgebildet und könnte auch gelenkig an der eigentlichen Dichtwand 29 befestigt sein und zwar um eine zur Achse der Antriebswelle 19 parallele Schwenkachse. Auf diese Weise wird die Dichtlippe 31 durch den Druck im Teilraum 23' besonders gut dichtend gegen die Außenfläche des auf die Antriebsrolle 22 aufgewickelten Zugbandes 21 gepreßt.

Fig. 18 zeigt eine ähnliche Ausführungsform wie die Fig. 3 und 4, wobei sich jedoch ähnlich wie beim Ausführungsbeispiel nach Fig. 17 die flexiblen Zugbänder 21 ohne Umkehr des Krümmungssinnes, den sie auf der Antriebsrolle 22 aufweisen, durch die Bandlaufräume 23 zur Umfangswand 30 erstrecken, um dort bei 26 am Gehäuse 24 befestigt zu werden.

Auch bei dieser Ausführungsform sind die Teilräume 23" am peripheren Ende durch eine Entlüftungsbohrung 37 und einen anschließenden Entlüftungskanal 37' zur umgebenden Atmosphäre hin entlüftet.

Der wesentliche Vorteil der Ausführungsform nach den Fig. 17 und 18 besteht darin, daß sich der Druck im druckbeaufschlagten Teilraum 23' bis zur Dichtlippe 31 der Dichtwand bzw. Dichtwände 29 ausbreiten kann, so daß der frei durch die Bandlaufräume 23 verlaufende und für die durch die Druckbeaufschlagung bedingte Zugkrafterzeugung verantwortliche Bereich des flexiblen Zugbands 21 gegenüber dem Ausführungsbeispiel nach den Fig. 3 und 4 erheblich, und zwar beim vorliegenden Ausführungsbeispiel um den Durchmesser der Antriebsrolle 22 vergrößert ist. Bei gleichem Druck wird somit die die Antriebsrolle 22 in Bewegung setzende Zugkraft des flexiblen Zugbandes 21 entscheidend erhöht.

In Fig. 18 ist das flexible Zugband in ausgezogenen Linien am Beginn einer Druckbeaufschlagung dargestellt sowie in gestrichelten Linien in zwei weiter fortgeschrittenen Stadien einer Druckauslösung, bei denen der Sicherheitsgurt bereits stärker gestrafft ist.

Besonders wichtig ist die Längserstreckung der Dichtwände 29 im wesentlichen tangential zur Antriebsrolle 22. Weiter sind erfindungsgemäß die Dichtwände 29 flexibel, d. h. insbesondere elastisch federnd ausgebildet oder beispielsweise bei 29' gelenkig am Gehäuse 24 befestigt, wobei durch geringfügige Federkräfte die Dichtwände 29 in Richtung auf das auf die Antriebsrolle 22 aufgewickelte flexible Zugband 21 zu vorgespannt sein können, so daß die Dichtlippen 31 leicht gegen die Außenfläche des aufgewickelten Zugbandes 21 angedrückt werden.

Auf diese Weise führt jede Druckbeaufschlagung der den Teilräumen 23' zugewandten Oberfläche der Dichtwände 29 dazu, daß diese mit ihrer Dichtlippe 31 gegen die Außenfläche des auf die Antriebsrolle 22 aufgewickelten Zugbandes 21 gedrückt werden, wodurch zwischen den Dichtlippen 31 und der Antriebsrolle 22 bzw. dem auf sie aufgewickelten Zugband 21 eine mit dem Druck im Teilraum 23' zunehmende Dichtwirkung erzielt wird.

Weiter wird in vorteilhafter Weise das Zugband 21 durch den es beaufschlagenden Druck im zugeordneten Teilraum 23' auch radial von innen nach außen gegen die Dichtlippe 31 angedrückt.

## Patentansprüche

1. Gurtstraffer bei Sicherheitsgurtanordnungen in Kraftfahrzeugen mit einem am Fahrzeugchassis zu befestigenden Halter (11), an dem drehbar eine Gurtaufwickelrolle (12) mit einem darauf aufgewickelten Sicherheitsgurt (13), eine Rückzugsfederanordnung (14, 14'), mittels der der Sicherheitsgurt (13) ständig in Einziehrichtung leicht so vorgespannt ist, daß er nur locker am von ihm gesicherten Fahrzeuginsassen anliegt, einer Feststellanordnung, insbesondere zwischen Gurtaufwickelrolle (12) und Halter (11) oder Fahrzeugchassis, welche den Sicherheitsgurt (13) bei plötzlichem Anziehen und/oder einer unfallbedingten Beschleunigung gegen Ausziehen sperrt, und mit einem über eine Kupplung (20) an die Gurtaufwickelrolle (12) angeschlossenen Zusatzantrieb (15), welcher normalerweise durch die ausgerückte Kupplung (20) von der Gurtaufwickelrolle (12) antriebsmäßig getrennt ist, jedoch bei einer unfallbedingten Beschleunigung schlagartig aktiviert und über die dann eingerückte Kupplung (20) drehfest mit der Gurtaufwickelrolle (12) gekuppelt wird, um den Sicherheitsgurt (13), noch bevor der von ihm gesicherte Fahrzeuginsasse in den Sicherheitsgurt (13) hineinfällt, um ein solches Wegstück aufzurollen, daß der Sicherheitsgurt straff am Fahrzeuginsassen anliegt, wobei der Zusatzantrieb (15) vorzugsweise eine beim unfallbedingten Ansprechen eines Beschleunigungssensors auslösbare bzw. zündbare, insbesondere pyrotechnische Druckquelle (16), welche bei Auslösung in einem Druckraum (17) schlagartig einen hohen Druck aufbaut, eine von dem Druck im Druckraum (17) beaufschlagte Drehmomenterzeugungsvorrichtung (18) und eine an diese angeschlossene Antriebswelle (19) aufweist, die über die Kupplung (20) drehfest mit der Gurtaufwickelrolle (12) verbindbar ist, wobei die Drehmomenterzeugungsvorrichtung (18) wenigstens ein flexibles Zugband (21), welches insbesondere aus Federstahl besteht, aufweist, das einerseits am Umfang der Antriebswelle (19) oder einer konzentrisch darauf angebrachten Antriebsrolle (22) an einer ersten Befestigungsstelle (25) befestigt und teilweise auf die Antriebswelle (19) bzw. die Antriebsrolle (22) aufgewickelt ist und andererseits an der Umfangswand (30) eines um die Antriebswelle (19) bzw. die Antriebsrolle (22) herum angeordneten, eine der Breite des Zugbandes (21) entsprechende Breite aufweisenden Bandlaufraumes (23) innerhalb eines Gehäuses (24) an einer zweiten Befestigungsstelle (26) befestigt ist, derart, daß sich das Zugband (21) - den Bandlaufraum (23) in zwei voneinander abgedichtete Teilräume (23', 23") unterteilend - durch den Bandlaufraum (23) erstreckt, und wobei der Teilraum (23'), der bei Druckbeaufschlagung eine Abwicklung des Zugbandes (21) von der sich drehenden Antriebswelle (19) bzw. Antriebsrolle (20) bewirkt, an den Druckraum (17) angeschlossen und der andere Teilraum (23") vorzugsweise entlüftet ist, und wobei zur druckmäßigen Entkopplung der Teilräume (23', 23") wenigstens eine sich zwischen dem Gehäuse (24) und dem Umfang der Antriebswelle (19) bzw. der konzentrisch darauf angebrachten Antriebsrolle (22) bzw. dem darauf aufgewikkelten flexiblen Zugband (21) erstreckende Dichtwand (29) vorgesehen ist,
**dadurch gekennzeichnet,**
**daß** die radiale Erstreckung des Bandlaufraumes (23) in der Drehrichtung der Antriebswelle (19) bzw. der Antriebsrolle (20) veränderlich ist.

2. Gurtstraffer nach Anspruch 1,
**dadurch gekennzeichnet,**
**daß** die radiale Erstreckung des Bandlaufraumes (23") - ausgehend von der der maximalen Aufwicklung auf der Antriebswelle (19) bzw. der Antriebsrolle (20) entsprechenden Ausgangsposition des Zugbandes (21) - in der bei Druckbeaufschlagung auftretenden Drehrichtung zunächst zunimmt und dann zumindest annähernd konstant bleibt oder wieder abnimmt.

3. Gurtstraffer nach einem der Ansprüche 1 oder 2,
**dadurch gekennzeichnet,**
**daß** über den Umfang der Antriebswelle (19) bzw. der Antriebsrolle (22) verteilt mehrere Zugbänder (21) und zugeordnete Bandlaufräume (23) vorgesehen sind, die durch Dichtwände (29) druckdicht voneinander getrennt sind.

4. Gurtstraffer nach Anspruch 3,
**dadurch gekennzeichnet,**
**daß** zwei Zugbänder (21) und zugeordnete Bandlaufräume (23) vorgesehen sind.

5. Gurtstraffer nach Anspruch 3 oder 4,
**dadurch gekennzeichnet,**
**daß** die Zugbänder (21) in gleichen Winkelabständen vorgesehen sind.

6. Gurtstraffer nach einem der Ansprüche 3 bis 5,
**dadurch gekennzeichnet,**
**daß** die mehreren Bandlaufräume (23) über geeignete Verzweigungsleitungen (27, 28) an einen einzigen Druckraum (17) bzw. eine einzige Druckquelle (16) angeschlossen sind.

7. Gurtstraffer nach einem der Ansprüche 3 bis 6,
**dadurch gekennzeichnet,**
**daß** die Dichtwände (29) sich von der Umfangswand (30) derart gekrümmt zum Umfang der Antriebswelle (19) bzw. Antriebsrolle (22) erstrecken, daß der sich zwischen der Antriebswelle (19) bzw. Antriebsrolle (20) und der Umfangswand (30) erstreckende Teil des Zugbandes (21) an der Ausgangsposition an der gekrümmten Dichtwand (29) anliegt und eine zum druckbeaufschlagten Teilraum (23') konkav gekrümmte Form annimmt.

8. Gurtstraffer nach Anspruch 7,
**dadurch gekennzeichnet,**
**daß** der sich zwischen der Antriebswelle (19) bzw. Antriebsrolle (22) und der Umfangswand (30) erstreckende Teil des Zugbandes (21) in der Endposition an der in Drehrichtung folgenden gekrümmten Dichtwand (29) anliegt.

9. Gurtstraffer nach einem der Ansprüche 3 bis 8,
**dadurch gekennzeichnet,**
**daß** die Dichtwände (29) sich zur Antriebswelle (19) bzw. Antriebsrolle (22) hin sichelartig verjüngen und radial innen mit den auf die Antriebswelle (19) bzw. Antriebsrolle (22) aufgewickelten Zugbändem (21) eine Dichtlippe (31) bilden.

10. Gurtstraffer nach einem der Ansprüche 3 bis 9,
**dadurch gekennzeichnet,**
**daß** auf der Druckseite der Zugbänder (21) im Bereich des geringsten Abstandes der auf die Antriebswelle (19) bzw. Antriebsrolle (22) aufgewickelten Zugbänder (21) und einer Dichtwand (29) sich quer über den Bandlaufraum (23) erstreckende Dichtelemente (32) angeordnet sind, deren Dicke so groß ist, daß sie auch bei im weitgehend abgewickelten Zustand der Zugbänder (21) vorhandenen maximalen Spalt zwischen aufgewickeltem Zugband-Umfang und Dichtwand (29) durch den Druck im druckbeaufschlagten Teilraum (23') dichtend an, aber nicht durch den Spalt hindurchgedrückt werden.

11. Gurtstraffer nach einem der Ansprüche 3 bis 10,
**dadurch gekennzeichnet,**
**daß** jeweils zwei in Drehrichtung aufeinanderfolgende Zugbänder (21) nicht im Bereich ihrer Befestigungsstellen (26) am Gehäuse (24) enden, sondern außerhalb des Bandlaufraumes (23) ineinander übergehen, derart, daß mittels eines langen Bandes zwei Zugbänder (21) realisiert sind.

12. Gurtstraffer nach Anspruch 11,
**dadurch gekennzeichnet,**
**daß** sich im Gehäuse (24) zwischen den benachbarten Befestigungsstellen (26) ein Bandkanal (33) erstreckt, durch den hindurch der Teil (21') des langen Bandes (21, 21', 21") geführt ist, der die eigentlichen Zugbänder (21) innerhalb des Gehäuses (24) verbindet.

13. Gurtstraffer nach Anspruch 12,
**dadurch gekennzeichnet,**
**daß** der Bandkanal (33) an einer Seite des Druckraumes (17) und die eine Verzweigungsleitung (27) an der gegenüberliegenden Seite des Druckraumes (17) mündet und das lange Band (21, 21', 21") derart durch den Druckraum (17) geführt ist, daß es den Druckraum (17) in einen Teil (17'), der an die eine Verzweigungsleitung (27) angeschlossen ist, und einen Teil (17'') unterteilt, der an die andere Verzweigungsleitung (28) angeschlossen ist, wobei die Druckgase wenigstens einer Schmalseite des den Druckraum (17) durchquerenden Bandteiles (21") zugeführt oder teilweise um wenigstens eine Schmalseite des betreffenden Bandteiles (21") herumgeführt werden.

14. Gurtstraffer nach einem der Ansprüche 3 bis 13,
**dadurch gekennzeichnet,**
**daß** die Dichtwände (29) auf der dem druckbeaufschlagten Teilraum (23') zugewandten Fläche wenigstens eine sich von radial außen nach radial innen erstreckende Gasleitungsnut (34) aufweisen.

15. Gurtstraffer nach einem der Ansprüche 3 bis 14,
**dadurch gekennzeichnet,**
**daß** das an der Antriebswelle (19) bzw. Antriebsrolle (22) befindliche Ende der Zugbänder (21) normalerweise von den unter Zugspannung stehenden Lagen der Zugbänder (21) auf der Antriebswelle (19) bzw. Antriebsrolle (22) in der Antriebswelle (19) bzw. Antriebsrolle (22) eingehängt gehalten wird und bei Druckabfall nach einer Auslösung in radialer Richtung selbsttätig aushängbar ist, wobei die Zugspannung vor der Auslösung im Normalzustand durch ein Haltemittel gewährleistet wird, das die Antriebswelle (19) bzw. die Antriebsrolle (22) bis zur Auslösung in gespanntem Zustand hält und bei einer Auslösung der Druckquelle (16) durch den im Druckraum (17) erzeugten Druck unwirksam gemacht.

16. Gurtstraffer nach Anspruch 15,
**dadurch gekennzeichnet,**
**daß** das Haltemittel ein Scherstift ist, der bei einer Auslösung der Druckquelle (16) durch den im Druckraum (17) erzeugten Druck weggebrochen wird.

17. Gurtstraffer nach Anspruch 14 oder 15,
**dadurch gekennzeichnet,**
**daß** eine am Zugbandende vorgesehene Federzunge (35) durch die darübergewickelten Lagen des Zugbandes in eine Umfangsvertiefung (36) der Antriebswelle (19) bzw. Antriebsrolle (22) gedrückt ist und so eine formschlüssige Antriebsverbindung zwischen dem Zugband (21) und der Antriebswelle (19) bzw. Antriebsrolle (22) herstellt sowie bei der Straffung entsprechende Abwicklung des Zugbandes (21) und Beendigung der Druckbeaufschlagung durch die ihr innewohnende federnde Rückstellkraft aus der Umfangsvertiefung (36) austritt und so die formschlüssige Antriebsverbindung zwischen dem Zugband (21) und der Antriebswelle (19) bzw. Antriebsrolle (22) aufhebt.

18. Gurtstraffer nach einem der Ansprüche 3 bis 17,
**dadurch gekennzeichnet,**
**daß** ein der Antriebswelle (19) bzw. Antriebsrolle (22) zugewandter Bereich der Dichtwände in Richtung des druckbeaufschlagten Teilraumes (23') durch die Federspannung der aufgewickelten Zugbandbereiche wegklappbar ausgebildet ist.

19. Gurtstraffer nach einem der Ansprüche 3 bis 18,
**dadurch gekennzeichnet,**
**daß** ein der Antriebswelle (19) bzw. Antriebsrolle (22) zugewandter Bereich der Dichtwände in Richtung des druckbeaufschlagten Teilraumes (23') durch eine zusätzliche Feder wegklappbar ausgebildet ist.

20. Gurtstraffer nach einem der Ansprüche 3 bis 19,
**dadurch gekennzeichnet,**
**daß** an den Dichtungswänden (29) auf der dem nichtdruckbeaufschlagten Teilraum (23") zugewandten Seite Entlüftungsöffnungen (37) vorgesehen sind.

21. Gurtstraffer nach einem der Ansprüche 3 bis 20,
**dadurch gekennzeichnet,**
**daß** sämtliche drehenden Teile (12, 19, 22, 41, 44, 47) koaxial an einer Stirnseite der Gurtaufwickelrolle (12) angeordnet sind.

22. Gurtstraffer nach einem der vorhergehenden Ansprüche,
**dadurch gekennzeichnet,**
**daß** die Rückzugsfederanordnung (14') auf der gleichen Stirnseite der Gurtaufwickelrolle (12) wie der Zusatzantrieb (15) und die Kupplung (20) angeordnet ist.

23. Gurtstraffer nach Anspruch 22,
**dadurch gekennzeichnet,**
**daß** der Zusatzantrieb (15) und die Kupplung (20) zwischen der Rückzugsfederanordnung (14') und der Gurtaufwickelrolle (12) liegen.

24. Gurtstraffer nach Anspruch 23,
**dadurch gekennzeichnet,**
**daß** die auf der Drehachse (38) liegenden Teile des Zusatzantriebes (15) und der Kupplung (20) im Bereich der Drehachse axiale Hohlräume zum Durchführen einer die Rückzugsfederanordnung (14') mit der Gurtaufwickelrolle (12) drehfest verbindenden Innenwelle (41) aufweisen.

## Claims

1. Belt tensioner for safety belt arrangements in motor vehicles having a holder (11) which is to be secured to the vehicle chassis and rotatably on the holder a belt winding reel (12) with a safety belt (13) wound thereon, a retraction spring arrangement (14, 14') by means of which the safety belt (13) is continuously and lightly pre-tensioned in the retraction direction so that it only lies loosely on the vehicle occupant secured by it, a blocking arrangement, in particular between the belt winding reel (12) and the holder (11) or the vehicle chassis which blocks the safety belt (13) against being pulled out if suddenly pulled, and/or in the event of an acceleration resulting from an accident, and an additional drive (15) connected to the belt winding reel (12) via a clutch (20), wherein the additional drive (15) is normally separated drivewise from the belt winding reel (12) by the disengaged clutch (20), but is abruptly activated in the event of an acceleration resulting from an accident and is rotationally fixedly coupled with the belt winding reel (12) via the then engaged clutch (20) in order, before the vehicle occupant falls into the safety belt (13), to wind up such a length that the safety belt lies tightly on the vehicle occupant, with the additional drive (15) preferably having a pressure source (16), in particular a pyrotechnical pressure source, which can be triggered or ignited by the accident dependent response of an acceleration sensor and which, on being triggered, abruptly builds up a high pressure in a pressure chamber (17), a torque generating device (18) which is energised by the pressure in the pressure chamber (17) and a drive shaft (19) connected to the torque generating device (18) which can be rotationally fixedly connected to the belt winding reel (12) via the clutch (20), wherein the torque generating device (18) has at least one flexible tension band (21) which in particular consists of spring steel and which is secured at one end at a first mounting point (25) to the periphery of the drive shaft (19), or of a drive reel (22) which is concentrically mounted thereon, is partially wound onto the drive shaft (19) or the drive reel (22) respectively, and is secured at the other end at a second mounting point (26) to the peripheral wall (30) of a band running chamber (23) which is arranged within a housing (24) around the drive shaft (19) or the drive reel (22) respectively and has a width corresponding to the width of the draw band (21), in such a way that the draw band (21) extends through the band running chamber (23), while subdividing the band running chamber (23) into two partial chambers (23', 23") sealed off relative to one another, wherein the partial chamber (23'), which on being subjected to pressure brings about an unwinding of the draw band (21) from the rotating drive shaft (19) or drive reel (20) respectively, is connected to the pressure space (17) and the other partial space (23") is vented and wherein, for the pressure-wise decoupling of the partial chambers (23', 23"), at least one sealing wall (29) is provided which extends between the housing (24) and the periphery of the drive shaft (19) or of the drive reel (22) concentrically mounted thereon or the flexible draw band (21) wound thereon, **characterised in that** the radial extent of the band running chamber (23) is variable in the direction of rotation of the drive shaft (19) or of the drive reel (20) respectively.

2. Belt tensioner in accordance with claim 1, **characterised in that** the radial extent of the band running chamber (23") first increases in the direction of rotation which arises on the application of pressure - starting from the starting position of the draw band (21) corresponding to the maximum wound up position on the drive shaft (19) or drive reel (20) respectively - and then remains at least approximately constant or reduces again.

3. Belt tensioner in accordance with one of the claims 1 or 2, **characterised in that** a plurality of draw bands (21) and associated band running chambers (23) are provided distributed over the periphery of the drive shaft (19) or drive reel (22) respectively, and are separated from one another in pressure-tight manner by sealing walls (29).

4. Belt tensioner in accordance with claim 3, **characterised in that** two draw bands (21) and associated band running chambers (23) are provided.

5. Belt tensioner in accordance with claim 3 or claim 4, **characterised in that** the draw bands (21) are provided at equal angular intervals.

6. Belt tensioner in accordance with any one of the claims 3 to 5, **characterised in that** the plural band running chambers (23) are connected via suitable branch lines (27, 28) to a single pressure chamber (17) or to a single pressure source (16).

7. Belt tensioner in accordance with any one of the claims 3 to 6, **characterised in that** the sealing walls (29) extend from the peripheral wall (30) to the periphery of the drive shaft (19) or of the drive reel (22) and are curved in such a way that the part of the draw band (21) extending between the drive shaft (19) or drive reel (20) and the peripheral wall (30) contacts the curved sealing wall (29) in the starting position and adopts a concavely curved shape relative to the partial chamber (23') which is subjected to pressure.

8. Belt tensioner in accordance with claim 7, **characterised in that** the part of the draw band (21) which extends between the drive shaft (19) or the drive reel (22) and the peripheral wall (30) contacts, in the end position, against the curved sealing wall (29) which follows in the direction of rotation.

9. Belt tensioner in accordance with any one of the claims 3 to 8, **characterised in that** the sealing walls (29) taper in scythe-like manner towards the drive shaft (19) or the drive reel (22) respectively, and form a sealing lip (31) radially inwardly with the draw bands (21) wound onto the drive shaft (19) or drive reel (22).

10. Belt tensioner in accordance with any one of the claims 3 to 9, **characterised in that**, sealing elements (32) extending transversely over the band running space (23) are arranged at the pressure side of the draw bands (21), in the region of the smallest spacing between the draw bands (21) wound onto the drive shaft (19) or drive reel (22) and a sealing wall (29), with the thickness of the sealing elements being sufficiently large that they are in sealing contact even with the maximum gap present in the largely uncoiled state of the draw band (21) between the periphery of the respective coiled up draw band and the sealing wall (29) due to the pressure in the partial chamber (23') to which pressure is applied, but are not pressed through the gap.

11. Belt tensioner in accordance with one of the claims 3 to 10, **characterised in that** in each case two draw bands (21) which follow one another in the direction of rotation do not end in the region of their mounting points (26) at the housing (24) but rather merge into one another outside of the band running chamber (23) in such a way that two draw bands (21) are realised by means of one long band.

12. Belt tensioner in accordance with claim 11, **characterised in that** a band channel (33) extends in the housing (24) between the neighbouring mounting points (26), with the part (21') of the long band (21, 21', 21") which connects the actual draw bands (21) within the housing (24) extending through the band channel (33).

13. Belt tensioner in accordance with claim 12, **characterised in that** the band channel (33) opens at one side of the pressure chamber (17) and the one branch line (27) opens at the opposite side of the pressure chamber (17) and the long band (21, 21', 21") is led through the pressure chamber (17) in such a way that it divides the pressure chamber (17) into a part (17') connected to the one branch line (27) and a part (17") which is connected to the other branch line (28), with the pressure gases being supplied at least to a narrow side of the band part (21") passing across the pressure chamber (17) or partly at least around a narrow side of the relevant band part (21").

14. Belt tensioner in accordance with any one of the claims 3 to 13, **characterised in that** the sealing walls (29) have at least one gas conducting groove (34) extending from radially outwardly to radially inwardly at the surface confronting the partial space (23') subjected to pressure.

15. Belt tensioner in accordance with one of the claims 3 to 14, **characterised in that** the end of the draw bands (21) located at the drive shaft (19) or drive reel (22) is normally kept engaged in the drive shaft (19) or drive reel (22) by the layers of the draw bands (21) which stand under tension on the drive shaft (19) or drive reel (22) and can be automatically disengaged in the radial direction on a drop in pressure following triggering, with the tension prior to triggering in the normal state being ensured by a retaining means, which holds the drive shaft (19) or the drive reel (22) in the tensioned state until triggered and is made inactive by the pressure generated in the pressure chamber (17) on triggering of the pressure source (16).

16. Belt tensioner in accordance with claim 15, **characterised in that** the retaining means is a shear pin which is broken away on triggering of the pressure source (16) by the pressure produced in the pressure space (17).

17. Belt tensioner in accordance with claim 14 or claim 15, **characterised in that** a spring tongue (35) provided at the draw band end is pressed by the layers of the draw band (21) wound above it into a peripheral recess (36) of the drive shaft (19) or drive reel (22), and in this way a form-locked drive connection is produced between the draw band (21) and the drive shaft (19) or drive reel (22), and **in that** the spring tongue also emerges from the peripheral recess (36) with the unwinding of the draw band (21) corresponding to belt tensioning and the termination of the pressure loading, as a result of the inherent resilient resetting force it possesses, and thus cancels the form locked drive connection between the draw band (21) and the drive shaft (19) or drive reel (22).

18. Belt tensioner in accordance with any one of the claims 3 to 17, **characterised in that** a region of the sealing walls facing the drive shaft (19) or drive reel (22), is formed so that it can fold away in the direction of the pressure loaded partial chamber (23') through the spring tension of the coiled up draw band regions.

19. Belt tensioner in accordance with any one of the claims 3 to 18, **characterised in that** a region of the sealing walls facing the drive shaft (19) or drive reel (22), is formed so that it can fold away in the direction of the pressure loaded partial chamber (23') through an additional spring.

20. Belt tensioner in accordance with any one of the claims 3 to 19, **characterised in that** vent openings (37) are provided at the sealing walls (29) at the side facing the non-pressure loaded partial space (23").

21. Belt tensioner in accordance with any one of the claims 3 to 20, **characterised in that** all the rotating parts (12, 19, 22, 41, 44, 47) are coaxially arranged at one end face of the belt winding reel (12).

22. Belt tensioner in accordance with any one of the preceding claims, **characterised in that** the retraction spring arrangement (14') is arranged at the same end face of the belt winding reel (12) as the additional drive (15) and the clutch (20).

23. Belt tensioner in accordance with claim 22, **characterised in that** the additional drive (15) and the clutch (20) lie between the retraction spring arrangement (14') and the belt winding reel (12).

24. Belt tensioner in accordance with claim 23, **characterised in that** the parts of the additional drive (15) and of the clutch (20) lying on the axis of rotation (38) have axial cavities in the region of the rotational axis for the passage of an inner shaft (41) which rotationally fixedly connects the retraction spring arrangement (14') with the belt winding reel (12).

## Revendications

1. Tendeur de ceinture pour dispositifs de ceintures de sécurité de véhicules à moteur avec une attache (11) à fixer sur un châssis de véhicule, sur lequel est monté de manière rotative un enrouleur de ceinture (12) avec une ceinture de sécurité (13) enroulée dessus, un dispositif de ressort de rappel (14, 14') au moyen duquel la ceinture de sécurité (13) est en permanence légèrement tendue dans le sens de rétraction de façon à être ajustée de manière lâche sur l'occupant du véhicule qu'elle protège, un dispositif de blocage, en particulier entre l'enrouleur de ceinture (12) et l'attache (11) ou le châssis du véhicule, qui bloque la ceinture de sécurité pour en empêcher le déroulement (13) en cas de tension soudaine et/ou d'une accélération provoquée par un accident et avec un entraînement auxiliaire (15) raccordé à l'enrouleur de ceinture (12) par un dispositif d'accouplement (20) qui est normalement séparé de l'enrouleur de ceinture (12) par le dispositif d'accouplement (20) désembrayé, mais qui est activé brusquement en cas d'accélération provoquée par un accident et qui est accouplé rigidement à l'enrouleur de ceinture (12) par l'intermédiaire du dispositif d'accouplement alors embrayé pour enrouler la ceinture de sécurité (13), avant que l'occupant du véhicule qu'elle protège ne tombe sur la ceinture de sécurité (13), sur une portion telle que la ceinture de sécurité soit tendue sur l'occupant du véhicule, moyennant quoi l'entraînement auxiliaire (15) présente de préférence une source de pression (16), en particulier pyrotechnique, déclenchable ou selon le cas allumable en cas de réaction d'un détecteur d'accélération provoquée par un accident qui, en cas de déclenchement dans un compartiment de compression (17), génère brusquement une pression élevée, un dispositif générateur de couple (18) mis en pression dans le compartiment de compression (17) et un arbre d'entraînement (19) accouplé à celui-ci qui est raccordable rigidement avec l'enrouleur de ceinture (12) par l'intermédiaire du dispositif d'accouplement (20), moyennant quoi le dispositif générateur de couple (18) présente au moins une bande de traction souple (21) qui est faite en particulier en acier à ressorts, qui, d'une part sur le pourtour de l'arbre d'entraînement (19) ou d'un rouleau d'entraînement (22) monté dessus de manière concentrique, est attachée à un premier emplacement de fixation (25) et est enroulée partiellement sur l'arbre d'entraînement (19) ou selon le cas le rouleau d'entraînement (22) et, d'autre part, sur la paroi périphérique (30) d'un compartiment de déroulement de la bande (23) à l'intérieur d'un boîtier (24) disposé autour de l'arbre d'entraînement (19) ou selon le cas du rouleau d'entraînement (22) ayant une largeur correspondant à la largeur de la bande de traction (21), est attachée à un deuxième emplacement de fixation (26) de telle manière que la bande de traction (21) - divisant le compartiment de déroulement de la bande (23) en deux sous-compartiments (23',23") étanches l'un par rapport à l'autre - s'allonge à travers le compartiment de déroulement de la bande (23) et moyennant quoi le sous-compartiment (23') qui, en cas de mise sous pression, provoque un déroulement de la bande de traction (21) hors de l'arbre d'entraînement (19) ou selon le cas du rouleau d'entraînement (20) en rotation, est raccordé au compartiment de pression (17) et l'autre sous-compartiment (23") est, de préférence, ventilé, et moyennant quoi, pour le découplage des sous-compartiments (23',23") du point de vue de la pression, on prévoit au moins une paroi étanche (29) s'étendant entre le boîtier (24) et le pourtour de l'arbre d'entraînement (19) ou selon le cas du rouleau d'entraînement (22) monté dessus concentriquement ou selon le cas la bande de traction souple (21) enroulée dessus, **caractérisé en ce que** l'étendue radiale du compartiment de déroulement de la bande (23) est variable dans le sens de rotation de l'arbre d'entraînement (19) ou selon le cas du rouleau d'entraînement (20).

2. Tendeur de ceinture de sécurité selon la revendication 1, **caractérisé en ce que** l'étendue radiale du compartiment de déroulement de la bande (23") - partant de la position de départ de la bande de traction (21) correspondant à l'enroulement maximal sur l'arbre d'entraînement (19) ou selon le cas du rouleau d'entraînement (20) - augmente d'abord dans le sens de rotation apparaissant lors de la mise sous pression puis reste au moins approximativement constante ou diminue de nouveau.

3. Tendeur de ceinture de sécurité selon l'une des revendications 1 ou 2, **caractérisé en ce que**, sur le pourtour de l'arbre d'entraînement (19) ou selon le cas du rouleau d'entraînement (22), sont prévues plusieurs bandes de traction (21) et compartiments de déroulement de la bande (23) correspondants qui sont séparés les uns des autres de manière étanche par des parois étanches (29).

4. Tendeur de ceinture de sécurité selon la revendication 3, **caractérisé en ce que** deux bandes de tractions (21) et des compartiments de déroulement de la bande (23) correspondants sont prévus.

5. Tendeur de ceinture de sécurité selon la revendication 3 ou 4, **caractérisé en ce que** les bandes de tractions (21) sont prévues à des intervalles angulaires égaux.

6. Tendeur de ceinture de sécurité selon l'une quelconque des revendications 3 à 5, **caractérisé en ce que** les divers compartiments de déroulement de la bande (23) sont raccordés à un seul compartiment de compression (17) ou selon le cas à une seule source de pression (16) par l'intermédiaire de conduits de branchement (27, 28) appropriés.

7. Tendeur de ceinture de sécurité selon l'une quelconque des revendications 3 à 6, **caractérisé en ce que** les parois étanches (29) s'étendent de manière recourbée entre la paroi périphérique (30) et la périphérie de l'arbre d'entraînement (19) ou selon le cas du rouleau d'entraînement (22) de telle sorte que la partie de la bande de traction (21) s'étendant entre l'arbre d'entraînement (19) ou selon le cas le rouleau d'entraînement (20) et la paroi périphérique (30) soit, en position de départ, adjacente à la paroi étanche (29) courbée et prend une forme courbée concave par rapport au sous-compartiment (23") mis en pression.

8. Tendeur de ceinture de sécurité selon la revendication 7, **caractérisé en ce que** la partie de la bande de traction (21) s'étendant entre l'arbre d'entraînement (19) ou selon le cas le rouleau d'entraînement (22) et la paroi périphérique (30) est, en position finale, adjacente à la paroi étanche (29) courbée suivante dans le sens de rotation.

9. Tendeur de ceinture de sécurité selon l'une quelconque des revendications 3 à 8, **caractérisé en ce que** les parois étanches (29) se rétrécissent en forme de croissant vers l'arbre d'entraînement (19) ou selon le cas le rouleau d'entraînement (22) et forment radialement à l'intérieur une lèvre d'étanchéité (31) avec les bandes de traction (21) enroulées sur l'arbre d'entraînement (19) ou selon le cas sur le rouleau d'entraînement (22).

10. Tendeur de ceinture de sécurité selon l'une quelconque des revendications 3 à 9, **caractérisé en ce que**, du côté d'attaque de pression des bandes de traction (21) dans la zone de moindre espacement des bandes de traction (21) enroulées sur l'arbre d'entraînement (19) ou selon le cas sur le rouleau d'entraînement (22) et d'une paroi étanche (29), des éléments étanches (32) s'étendent transversalement au-dessus du compartiment de déroulement de la bande (23), l'épaisseur desdits éléments étant telle que même avec la fente maximale présente entre la périphérie de la bande de traction enroulée et la paroi étanche (29) lorsque les bandes de traction (21) sont amplement déroulées, ils sont pressés par la pression dans le sous-compartiment mis sous pression (23') de manière étanche contre, mais pas à travers, la fente.

11. Tendeur de ceinture de sécurité selon l'une quelconque des revendications 3 à 10, **caractérisé en ce que** deux bandes de traction (21) se suivant dans le sens de rotation n'aboutissent pas dans la zone de leurs emplacements de fixation (26) sur le boîtier (24), mais se confondent à l'extérieur du compartiment de déroulement de la bande (23) de façon à ce que deux bandes de traction (21) soient réalisées au moyen d'une longue bande.

12. Tendeur de ceinture de sécurité selon la revendication 11, **caractérisé en ce qu'**un passage de bande (33) s'étend entre les emplacements de fixation (26) voisins dans le boîtier (24) à travers lequel passe la partie (21') de la longue bande (21,21',21") qui relie les bandes de tractions (21) proprement dites à l'intérieur du boîtier (24).

13. Tendeur de ceinture de sécurité selon la revendication 12, **caractérisé en ce que** le passage de bande (33) débouche d'un côté du compartiment de compression (17) et l'un des conduits de branchement (27) débouche du côté opposé du compartiment de compression (17) et la longue bande (21,21',21") passe à travers le compartiment de compression (17) de telle manière qu'elle divise le compartiment de compression (17) en une partie (17') qui est raccordée à l'un des conduits de branchement (27) et en une autre partie (17") qui est raccordée à l'autre conduit de branchement (28), moyennant quoi les gaz comprimés sont amenés vers au moins un côté étroit de la partie de bande (21") traversant le compartiment de compression (17) ou conduits en partie autour d'au moins un côté étroit de la partie de bande concernée (21").

14. Tendeur de ceinture de sécurité selon l'une quelconque des revendications 3 à 13, **caractérisé en ce que** les parois étanches (29) présentent une rainure de canalisation de gaz (34) s'étendant radialement de l'extérieur vers l'intérieur sur la surface tournée vers le sous-compartiment (23') mis sous pression.

15. Tendeur de ceinture de sécurité selon l'une quelconque des revendications 3 à 14, caractérisé en ce l'extrémité des bandes de traction (21) se trouvant sur l'arbre d'entraînement (19) ou selon le cas sur le rouleau d'entraînement (22) est normalement maintenue suspendue dans l'arbre d'entraînement (19) ou selon le cas dans le rouleau d'entraînement (22) par les positions de traction des bandes de traction (21) sur l'arbre d'entraînement (19) ou selon le cas sur le rouleau d'entraînement (22) et, en cas de chute de pression, peut être décrochée automatiquement dans le sens radial après un déclenchement, la traction étant assurée à l'état normal, avant le déclenchement, par un moyen de retenue qui maintient l'arbre d'entraînement (19) ou selon le cas le rouleau d'entraînement (22) en état tendu jusqu'au déclenchement et étant mise hors service lors d'un déclenchement de la source de pression (16) par la pression générée dans le compartiment de compression (17).

16. Tendeur de ceinture de sécurité selon la revendication 15, caractérisé en ce le moyen de retenue est un goujon de cisaillement qui est enlevé par cassure lors d'un déclenchement de la source de pression (16) par la pression générée dans le compartiment de compression (17).

17. Tendeur de ceinture de sécurité selon la revendication 14 ou 15, **caractérisé en ce qu'**une lame flexible (35) prévue à l'extrémité de la bande de traction est pressée dans un creux de la périphérie (36) de l'arbre d'entraînement (19) ou selon le cas du rouleau d'entraînement (22) par les positions de la bande de traction enroulées dessus, formant ainsi une connexion d'entraînement crabotée entre la bande de traction (21) et l'arbre d'entraînement (19) ou selon le cas le rouleau d'entraînement (22) et réalisant, lors de la traction, le déroulement correspondant de la bande de traction (21) et l'arrêt de la mise en pression à l'aide de sa force de rappel élastique inhérente lors de sa sortie du creux de la périphérie (36), et supprimant ainsi la connexion d'entraînement entre la bande de traction (21) et l'arbre d'entraînement (19) ou selon le cas le rouleau d'entraînement (22).

18. Tendeur de ceinture de sécurité selon l'une quelconque des revendications 3 à 17, **caractérisé en ce qu'**une zone des parois étanches tournée vers l'arbre d'entraînement (19) ou selon le cas le rouleau d'entraînement (22) est formée de manière rabattable dans le sens du sous-compartiment (23') sous pression par la tension du ressort des zones de bande de traction déroulées.

19. Tendeur de ceinture de sécurité selon l'une quelconque des revendications 3 à 18, **caractérisé en ce qu'**une zone des parois étanches tournée vers l'arbre d'entraînement (19) ou selon le cas le rouleau d'entraînement (22) est formée de manière rabattable dans le sens du sous-compartiment (23') sous pression par un ressort supplémentaire.

20. Tendeur de ceinture de sécurité selon l'une quelconque des revendications 3 à 19, **caractérisé en ce que** des ouvertures d'aération (37) sont prévues dans les parois étanches (29) sur le côté tourné vers le sous-compartiment (23") non mis sous pression.

21. Tendeur de ceinture de sécurité selon l'une quelconque des revendications 3 à 20, **caractérisé en ce que** toutes les parties en rotation (12, 19, 22, 41, 44, 47) sont disposées de manière coaxiale sur un côté frontal de l'enrouleur de ceinture (12).

22. Tendeur de ceinture de sécurité selon l'une quelconque des revendications précédentes, **caractérisé en ce que** le dispositif de ressort de rappel (14') est disposé sur le même côté frontal de l'enrouleur de ceinture (12) que l'entraînement auxiliaire (15) et que l'accouplement (20).

23. Tendeur de ceinture de sécurité selon la revendication 22, **caractérisé en ce que** l'entraînement auxiliaire (15) et l'accouplement (20) sont placés entre le dispositif de ressort de rappel (14') et l'enrouleur de ceinture (12).

24. Tendeur de ceinture de sécurité selon la revendication 23, **caractérisé en ce que** les parties de l'entraînement auxiliaire (15) et de l'accouplement (20) placées sur l'axe de rotation (38) présentent, dans la zone de l'axe de rotation, des cavités axiales pour le passage d'un arbre intérieur (41) reliant rigidement le dispositif de ressort de rappel (14') à l'enrouleur de ceinture (12).
